# EUROPEAN PATENT SPECIFICATION

(11) **EP 0 379 445 B1**
(45) Date of publication and mention of the grant of the patent: **13.03.1996**
(21) Application number: 90400160.9
(22) Date of filing: 19.01.1990
(51) Int. Cl.: G11B 27/026, G11B 27/11, G11B 27/34, G11B 27/029, G11B 27/30, G11B 31/00, H04N 1/21

(54) **Disk recording and/or reproducing apparatus**
Plattenaufzeichnungs- und Wiedergabegerät
Appareil à disque pour enregistrer et reproduire

(30) Priority: 20.01.1989 JP 12478/89; 20.01.1989 JP 12479/89
(43) Date of publication of application: 25.07.1990
(73) Proprietor: SONY CORPORATION, Tokyo (JP)
(72) Inventor: Yamaoka, Katsumi, Shinagawa-ku, Tokyo (JP)
(74) Representative: Thévenet, Jean-Bruno

(56) References cited:
- EP-A- 0 225 408
- DE-A- 3 644 383
- DE-A- 3 705 185
- US-A- 4 672 471
- PATENT ABSTRACTS OF JAPAN, vol. 7, no. 218 (E-200)[1363], 28th September 1983;
- & JP-A-58 108 882 (SONY K.K.) 29-06-1983
- PATENT ABSTRACTS OF JAPAN, vol. 12, no. 20 (E-575)[2867], 21st January 1988; & JP-A-62 176 379 (SONY CORP.) 03-08-1987
- PATENT ABSTRACTS OF JAPAN, vol. 13, no. 19 (P-814), 18th January 1989; & JP-A-63 222 380 (NEC CORP.) 16-09-1988, & US-A-4 839 878 (INOUE) (Cat. P)

## Description

### BACKGROUND OF THE INVENTION

### Field of the Invention

This invention relates generally to a disk reproducing apparatus, and more particularly is directed to an apparatus for reproducing still picture video and audio signals recorded on a disk.

### Description of the Prior Art

An electronic still camera is known which is constituted by a separable camera body and reproducing adapter. In such electronic still camera, a magnetic disk is installed in the camera body, and a still picture video signal generated by an image pick-up element in the camera body is recorded on the magnetic disk. In the reproducing mode, the camera body and the reproducing adapter are connected to each other, and the still picture video signal recorded on the magnetic disk in the camera body is reproduced and processed by a reproducing or playback circuit within the reproducing adapter.

It has also been proposed to provide an electronic still camera which is capable of recording both a still picture video signal and an audio signal associated with such still picture. For example, as disclosed in Japanese Patent Laid Open Publications No. 62-95079 and No. 62-99972, an audio signal of a predetermined duration is initially stored and then time-base compressed to correspond to one field period of the still picture video signal prior to being recorded in a respective track on the magnetic disk. Each such track for the recording of audio signals may be divided into a plurality of sectors so that a series or sequence of audio signals may be recorded in one track or in a plurality of tracks. A flag and a control code are also recorded in each sector of the audio track for providing so-called initiation, connection and completion information and also for identifying the track number in which a corresponding or associated picture signal is recorded. During reproducing, information derived from the flag and control code is employed for reproducing a sequence or series of the recorded audio signals. Further, an error detection code is added to the control code so that an error in the latter can be detected from the error detection code.

However, in the proposed electronic still camera capable of also recording an audio signal, the connection information by which each sector may be connected or related to other sectors containing recorded audio signals may be lost if a defect is present in the audio track at the location where the flag and/or control code is recorded. In such case, even if the time-base compressed audio signal is complete, as recorded in a respective sector, the absence of the recorded flag and/or control code prevents the reliable reproducing of the recorded audio signal.

Furthermore, in an electronic still camera capable of recording an audio signal as well as a still picture video signal, it is desirable that the audio signal associated with a still picture be after-recorded, that is, recorded after the still picture video signal is recorded or while the recorded video signal is being reproduced so that the corresponding still picture can be observed. In order to permit such after-recording of the audio signal, it is necessary that, during the recording of a still picture video signal by the electronic still camera, a track on the disk is secured or reserved for the subsequent after-recording of the audio signal. In existing electronic still cameras, the successively recorded still picture video signals are recorded in respective circular tracks on the magnetic disk which are arranged in succession from the outer circumference of the disk towards the center thereof. In existing electronic still cameras capable of after-recording audio signals as well as still picture video signals, at the time of the recording of each still picture video signal, a track for the after-recording of an associated audio signal is reserved at the inner circumference of the track in which the still picture video signal is being recorded.

However, by securing or reserving a track for the after-recording of an audio signal at the inner circumference of the track in which an associated still picture video signal is being recorded, either an audio signal recorded in such track at the inner circumference of a video track may be lost or erased, or an unrecorded or empty track may remain on the magnetic disk intermediate its effective inner and outer margins in the event that a partially recorded disk is installed in the electronic still camera for further recording of video and/or audio signals thereon.

The above noted problem results from the fact that, in an electronic still camera comprised of a separable camera body and reproducing adapter, it cannot be determined, by means of the camera body alone which does not include a reproducing circuit and which is used alone for recording, whether a partially recorded disk installed in the camera body has its previously recorded tracks recorded with video signals alone or also with audio signals. In other words, when a partially recorded disk is installed in the camera body, it cannot be determined whether the track at the inner margin of the previously recorded area of the disk has been reserved for after-recording of audio signals therein, has already had audio signals recorded therein, or is a video track, that is, a track in which a still picture video signal has been recorded. Thus, when a partially recorded disk is loaded into the camera body, the subsequent recording program cannot be determined to be consistent with whether or not a track has been reserved for the after-recording of audio signals at the inner circumference of the last recorded video track.

If it is assumed that an audio track is always reserved at the inner circumference of the last recorded video track on a partially recorded disk installed in the camera body, such reserved track may remain empty or be wasted if, in fact, an audio signal is not after-recorded in the reserved track. On the other hand, if it is assumed that a track at the inner circumference of the previously recorded area of the installed, partially recorded disk is not to be reserved for the after-recording of audio signals therein, that is, if the next still picture video signal is recorded in the track at the inner circumference of the previously recorded area, there is the danger that, if the noted assumption is erroneous, audio signals recorded in the reserved track at the inner circumference of the previously recorded area of the disk will be lost.

Further, if the track reserved for after-recording of an audio signal associated with a still picture video signal is disposed at the inner circumference of the track in which the still picture video signal is recorded, it is necessary to move the playback head in both radially inward and outward directions for achieving substantially simultaneous reproducing of the associated audio and video signals. More specifically, since the audio signal is time-based compressed for its recording in a sector of the respective audio track, the reproduced audio signal has to be written in a memory and then read therefrom at a slower rate for effecting its time-base expansion during reproducing. Therefore, the head has to initially scan the audio track and thereafter scan the respective video track if substantially simultaneous reproduction of the associated audio and video signals is to be realized. Accordingly, when the audio signal is recorded in a track at the inner circumference of the track in which the associated still picture video signal is recorded, as in the prior art, the playback head is first moved radially inward to scan the audio track for storage of the recorded audio signal in the memory, and then the playback head is moved radially outward so as to scan the track in which the associated still picture video signal is recorded. Since the successively recorded still picture video signals are recorded in respective circular tracks on the magnetic disk which are arranged in succession from the outer circumference of the disk towards the center thereof in existing electronic still cameras, if the track reserved for after-recording of the audio signal is at the inner circumference of the track in which the associated still picture video signal is recorded, it is necessary to reciprocate the head in the radially inner and outer directions when the successively recorded still picture video signals and the associated audio signals are to be reproduced in the order in which the still pictures were recorded. By reason of such radially inner and outer reciprocating movements of the head that are required when the still picture and audio tracks are arranged in accordance with the prior art, an undesirably long access time is required.

For an example of a prior art still camera corresponding to the preamble of claim 1, reference can be made to patent document JP-A- 62176379.

### OBJECTS AND SUMMARY OF THE INVENTION

Accordingly, it is an object of the present invention to provide an apparatus for reproducing a still picture video signal and a time-base compressed audio signal recorded in respective tracks on a disk, and which avoids the above described problems encountered with the prior art.

Another object of the present invention is to provide an electronic still camera capable of recording both a still picture video signal and an associated audio signal in respective tracks on a disk, and in which the loss of recorded audio signals and/or the appearance of unused tracks are avoided when a partially recorded disk is installed in the electronic still camera for the further recording of still picture video signals thereon.

Still another object of the invention is to provide an electronic still camera capable of recording both a still picture video signal and an associated audio signal in respective tracks on a disk, and in which successively recorded still picture video signals can be reproduced in sequence along with the associated audio signals while the reproducing head is moved radially in one direction for thereby reducing the access time.

These objects are met by the electronic still camera defined in claim 1.

In accordance with an aspect of the present invention, in an electronic still camera capable of recording both still picture video signals and associated time-base compressed audio signals in an after-recording mode, the successively recorded still picture video signals are recorded in respective circular tracks on the disk which are arranged in succession from the outer circumference of the disk towards the center thereof, and the audio signal associated with each still picture video signal is recorded in a track which is at the outer circumference of the track in which the respective still picture video signal is recorded.

In accordance with another aspect of the present invention, an electronic still camera for recording still picture video signals and time-base compressed audio signals in respective tracks on a disk, has a continuous shots mode in which successive still pictures are recorded in a group of respective tracks arranged in succession in the radially inward direction of the disk, and further being capable of after-recording in which, at the initiation of the recording of the still picture video signals in the continuous shots mode, a track at the outer circumference of the outermost one of the tracks in the group to be used for recording of the still picture video signals, is reserved for the after-recording of the audio signal or signals associated with the still picture or pictures recorded in the continuous shots mode.

In a preferred embodiment of the invention, the electronic still camera is provided with a release button which is continuously pressed in the continuous shots mode so that still picture video signals are sequentially recorded in successive tracks arranged one after the other in the radially inward direction after one track at the outer circumference of the tracks in which the still picture video signals are recorded is reserved or maintained vacant for receiving the after-recorded associated audio signals. When a single shot mode is selected along with after-recording, a track is reserved or maintained vacant for receiving the after-recorded audio signal at the outer circumference of each track in which a still picture video signal is recorded in response to each momentary depressing of the release button. Thus, in both the single shot mode and the continuous shots mode, a track is reserved for after-recording of the audio signal or signals at the outer circumference of the track or tracks in which the still picture video signal or signals are recorded. By reason of the foregoing, audio signals after-recorded in such reserved track cannot be lost in the event that the disk, when only partially recorded, is removed from the electronic still camera and thereafter reinstalled in such camera for further recording of video or video and audio signals on such disk. Furthermore, by reason of the described arrangement of each track reserved for the after-recording of audio signals relative to the track or tracks in which associated still picture video signals are recorded, the occurrence of wasted tracks intermediate the inner and outer circumferential margins of the recorded area on the disk is avoided even when the disk is reinstalled in the electronic still camera for further recording of video or video and audio signals thereon.

The above, and other objects, features and advantages of the present invention, will become readily apparent from the following detailed description thereof, particularly when read in connection with the accompanying drawings in which corresponding parts are identified by the same reference numerals in the several views.

### BRIEF DESCRIPTION OF THE DRAWINGS

Fig. 1 is a perspective view of a camera body forming part of an electronic still camera in accordance with an embodiment of the present invention;
Fig. 2 is a perspective view of a magnetic disk cassette that can be used in the camera body of Fig. 1;
Fig. 3 is a perspective view of a reproducing adapter intended to be used with the camera body of Fig. 1 in an electronic still camera embodying the present invention;
Fig. 4A and 4B, taken together, constitute a block diagram of circuit arrangements included in the camera body of Fig. 1;
Figs. 5A and 5B, taken together, constitute a block diagram showing the circuit arrangements included in the reproducing adapter of Fig. 3;
Figs. 6A-6E, taken together, constitute a flow chart to which reference will be made in explaining a program performed by the camera body in accordance with an embodiment of this invention in its after-recording mode;
Figs. 7A and 7B are schematic diagrams illustrating the positional relationships of audio and video tracks on magnetic disks recorded in accordance with an embodiment of the present invention in a single shot mode and a continuous shots mode, respectively;
Figs. 8A and 8B and Figs. 9A-9D illustrate flow charts to which reference will be made in explaining processing in the after-recording and simultaneous recording modes of the electronic still camera in accordance with an embodiment of this invention;
Figs. 10, 11, 12 and 13 are schematic diagrams to which reference will be made in explaining a recording format for audio signals that is desirably used in electronic still cameras embodying the present invention; and
Figs. 14 and 15 are schematic diagrams illustrating the manner in which a directory or index table is produced for use in an electronic still camera according to this invention.

### DETAILED DESCRIPTION OF PREFERRED EMBODIMENTS

### General Description of the Camera Body

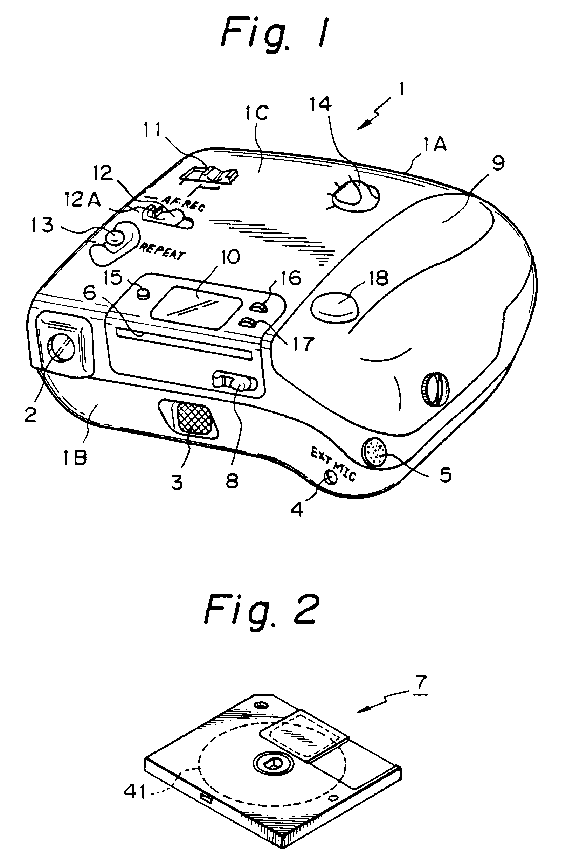

An electronic still camera to which the present invention is desirably applied includes a camera body 1 (Fig. 1) by which a still picture and an associated audio signal can be recorded. The camera body 1 has a surface 1A at the front thereof which faces away from the viewer on Fig. 1, and in which there are provided, for example, a camera lens, a strobe flashing window, and the like, all of which are not shown. At a rear surface 1B of the camera body 1, there are provided a viewfinder 2, a built-in microphone 3 and a jack 4 at which an external microphone may be connected to the camera body 1. A connector 5 is also provided at the rear surface 1B for use in connecting a reproducing adapter to the camera body 1.

A disk insertion slot 6 is located at the central portion of the rear surface 1B for permitting insertion into the camera body 1 of a magnetic disk cassette 7 (Fig. 2). As hereinafter described in detail, a still picture and an audio signal associated therewith may be recorded on a magnetic disk 41 contained in the magnetic disk cassette 7 after the latter has been inserted through the slot 6 into the camera body 1 and is operatively positioned within the latter. An eject button 8 projects from the body 1 adjacent the slot 6 and can be manipulated for ejecting the magnetic disk cassette 7 out of the camera body 1 through the slot 6.

A portion of the camera body 1 is in the form of a cover 9 which is suitably removable from the remainder of the camera body for exposing an underlying recess in which a rechargeable or other battery may be suitably positioned. A liquid crystal display 10 is situated on the camera body 1 above the slot 6 and is operative to display various items of information pertinent to the operations of the camera. For example, when an after-recording operation is carried out, as hereinafter described in detail, the number of seconds remaining for the recording of sound is shown on the display 10. Further, by way of example, when sound is being erased, the symbol "E" appears on the display 10 and, when only a few tracks remain unrecorded on a disk installed in the camera body 1, a warning to that effect appears on the liquid crystal display 10.

The camera body 1 is further shown to be provided with a number of operation controlling switches or the like indicated at 11-18 on Fig. 1. More specifically, the reference 11 identifies an audio recording/reproducing mode selecting switch which is operable by a slide displaceable manually to any one of three positions. In one position of the switch 11 a "muting" mode is selected in which there is no recording of the sound, while the other two positions of the switch 11 respectively select an "after-recording" mode and a "simultaneous recording" mode for the recording of sound.

When the selection switch 11 is in its "after-recording" position, the camera body 1 alone can be used to effect the after-recording of an audio signal associated with a recorded still picture in response to the actuation of an after-recording switch indicated by the reference 12, as hereinafter described in detail. The duration of the sound that can be recorded in the after-recording mode is limited, for example, to 9.6 seconds. Similarly, when the switch 11 is positioned for selecting the "simultaneous recording" mode, the recorded sound may have a maximum duration of 9.6 seconds following the completion of the recording of a still picture. The "simultaneous recording" mode differs from the "after-recording" mode only in that, in the case of the simultaneous recording, the sound is recorded on the disk 41 immediately after the recording thereon of the associated still picture, whereas, in the case of after-recording, an audio signal is recorded at any time after the recording of the still picture or pictures. When the switch 11 is in its "muting" position, the camera body 1 is effective to record only a still picture.

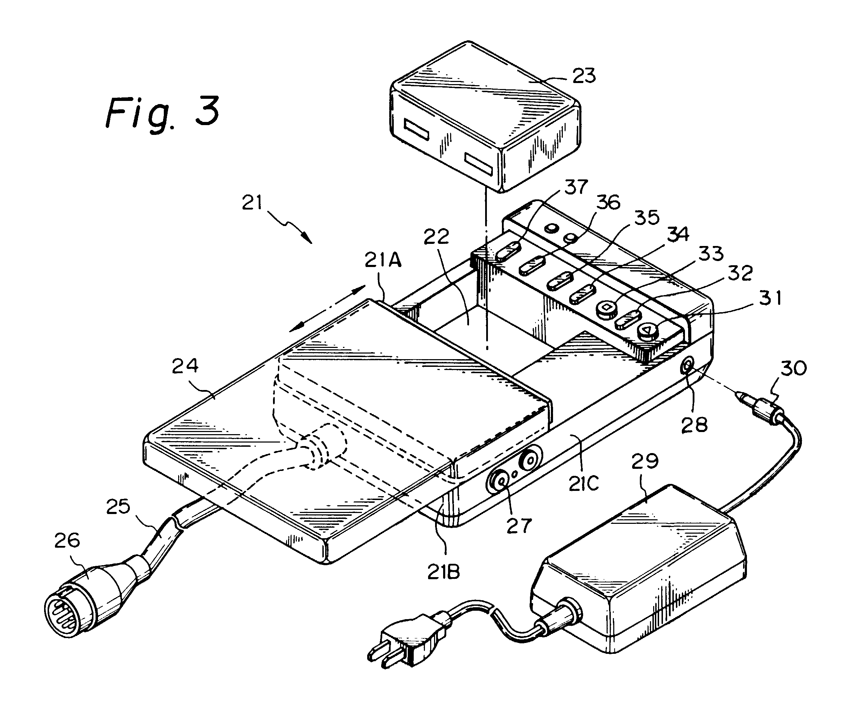

When the camera body 1 and a reproducing adapter 21 hereinafter described in detail with reference to Fig. 3 are connected, an audio signal associated with a picture being reproduced through the adapter 21 can be recorded on the disk provided that the switch 11 is then in its "after-recording" or "simultaneous recording" position. Upon the actuation of the after-recording switch 12, an audio signal received by the built-in microphone 3 or by an external microphone attached to the jack 4 can be recorded. In order to avoid inadvertent operation of the after-recording switch 12, the latter is preferably of the type having a projecting portion 12A which has to be depressed to permit the sliding operation of the switch 12. The avoidance of inadvertent operation of the switch 12 ensures that a noise associated with the switch operation will not be mixed with the audio signal intended to be after-recorded.

Reference 13 identifies an audio repeat switch that can be manually depressed during reproducing operation of the electronic still camera for causing a recorded audio signal to be reproduced repeatedly so long as the switch or push-button 13 is depressed.

Reference 14 identifies a rotary mode selection switch movable to any one of four positions corresponding to a "lock" mode, a "single shot" mode, a "continuous shots" mode and a "high speed continuous shots" mode. With the switch 14 positioned to select the "lock" mode, operation of the camera body 1 is prevented. With the switch 14 positioned to select the "single shot" mode, a still picture is recorded each time a release button indicated at 18 and hereinafter further described is actuated or depressed. With the switch 14 positioned to select the "continuous shots" mode, still pictures are recorded one after the other so long as the release button 18 is depressed and provided that the switch 11 is not in its "simultaneous recording" position. If the audio reproducing mode selecting switch 11 is in its "simultaneous recording" position, the positioning of the switch 14 for selecting the "continuous shots" mode will be ineffective, that is, the "single shot" mode will be established to permit the "simultaneous" recording of the audio signal immediately adjacent the outer circumference of each track in which a still picture is recorded.

Reference numeral 15 identifies a self-timer switch which is conventionally operative so that the camera body 1 will be operative to automatically record a still picture which is in the field of view of the camera at a predetermined time after the release button 18 is pressed with the self-timer switch 15 in its depressed condition.

Reference numeral 16 identifies an ON/OFF switch for a buzzer. By way of example, when the switch 16 is in its ON position, audible warnings are provided by the buzzer to indicate the imminence of various conditions, such as, the point for starting the audio recording and the point for completing the audio recording when the camera body 1 is in its after-recording mode.

Reference numeral 17 identifies a switch for establishing a "blank search" mode in which a vacant track is located for the recording of the next still picture video signal to be recorded in such vacant track on the magnetic disk 41 within the cassette 7.

The earlier mentioned release button 18 is adapted to be depressed in two stages. More specifically, when the release button 18 is lightly pressed so as to be only slightly depressed, power is supplied to the recording section of the camera body 1 so as to commence rotation of the magnetic disk 41 and establish the stand-by state for the recording of a still picture. When the release button 18 is more strongly acted upon or completely depressed, a still picture is then recorded. On the other hand, during a reproducing operation of the electronic still camera, the release button 18 may be depressed to effect frame sending of a still picture recorded in a track of the disk then being scanned.

It will be noted that the recording of a still picture and an audio signal associated therewith can be effected by means of the camera body 1 alone. However, a reproducing operation requires that the camera body 1 be connected with the reproducing adapter 21.

### General Description of the Reproducing Adapter

As shown in Fig. 3, the reproducing adapter 21 has a housing defining a recess 22 for accommodating a rechargeable battery pack 23 or the like, and which opens at an upper surface 21A of the adapter housing. A cover 24 is slidable on the upper portion of the adapter housing for movement between the open position shown on Fig. 3 and a closed position in which the cover 24 closes the recess 22 for securing the battery pack 23 therein. A cable 25 extends from a side surface 21B of the housing of the reproducing adapter 21 and terminates in a connector 26 engageable in the connector 5 of the camera body 1 for connecting the latter to the reproducing adapter 21, for example, when a still picture recorded by the camera body 1 is to be reproduced by the combined operation of the camera body 1 with the adapter 21.

An output terminal 27 is provided at a side surface 21C of the housing of the reproducing adapter 21 and may be engaged by a suitable cable though which a still picture video signal reproduced through the combined operation of the camera body 1 and the reproducing adapter 21 is supplied to a monitor receiver (not shown) for displaying the reproduced still picture on the screen of such receiver. Further, a DC input terminal 28 is provided at the side surface 21C to receive a plug 30 extending from an AC/DC adapter or converter 29.

A series of control buttons 31-37 are provided on the housing of the reproducing adapter 21 for controlling various operations of the latter, as hereinafter described in detail, and are disposed so as to be covered or shielded by the slidable cover 24 when the latter is in its fully closed position and exposed for manual operation when the cover 24 is partially open. More specifically, such control buttons are shown to include a reproducing button 31 that may be depressed for reproducing recorded still pictures one-by-one, a continuous reproducing button 32 that may be depressed for causing the continuous reproducing of still pictures, for example, for a period of five seconds, a stop button 33, a reverse button 34, a forward button 35, an erase button 36 that may be depressed for erasing the recorded still pictures one-by-one, and an automatic erase button 37 that may be depressed for causing erasure of all signals recorded on the magnetic disk.

### Circuit Arrangement of the Camera Body

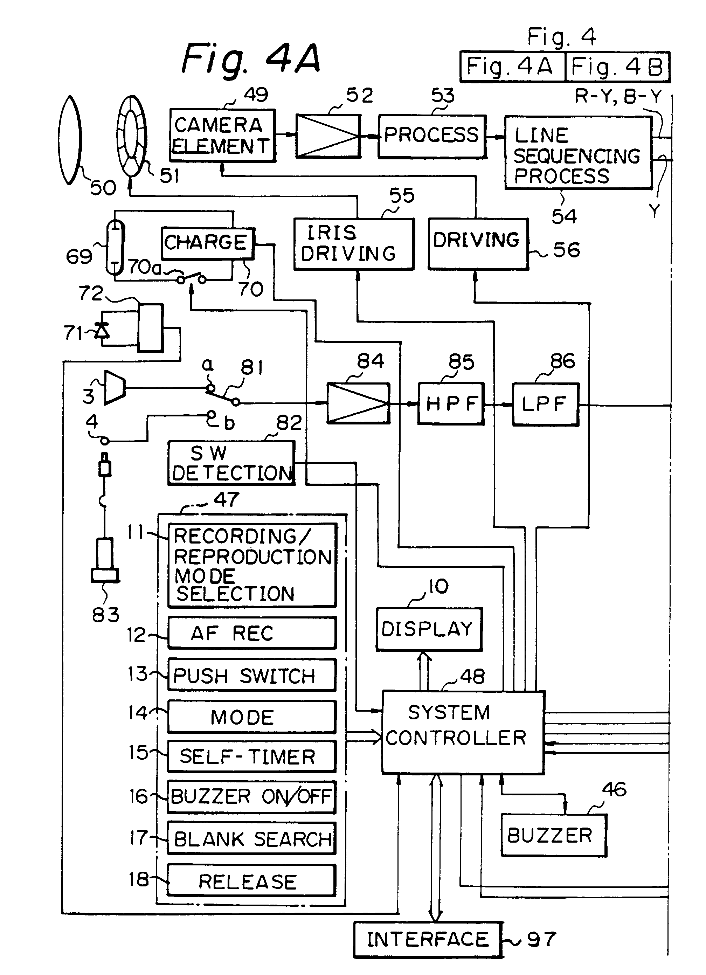

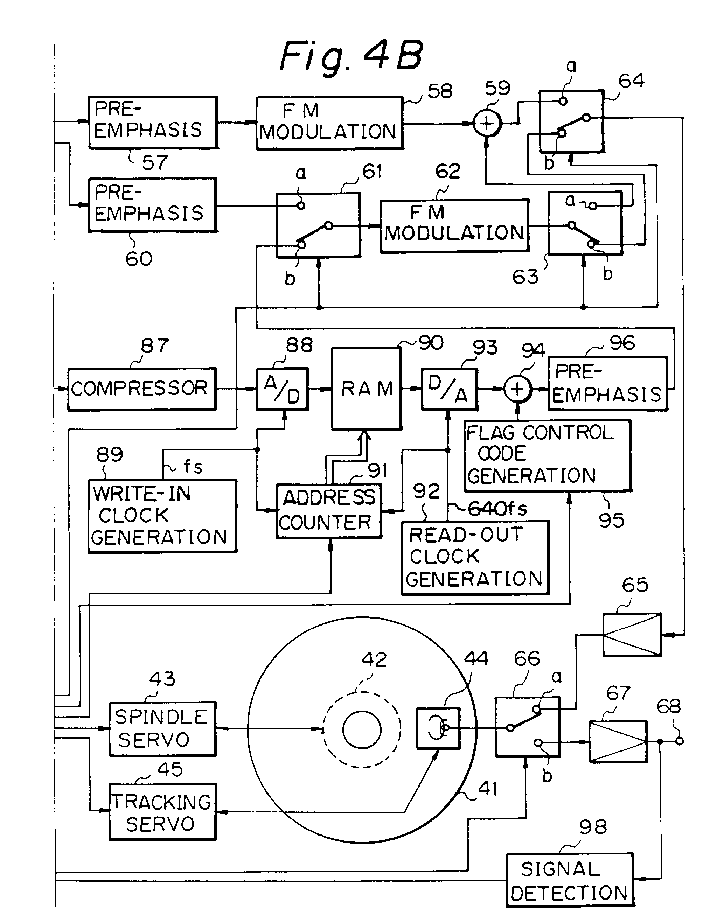

Referring now to Figs. 4A and 4B, it will be seen that, in the camera body 1 according to the present invention, the magnetic disk 41 within the suitably positioned cassette 7 (Fig. 2) is adapted to be rotated by a spindle motor 42 under the control of a spindle servo 43. A magnetic head 44 for recording and reproducing signals on the magnetic disk 41 is positioned in the radial direction of the disk by means of a tracking servo 45. The spindle and tracking servos 43 and 45 are under the control of a system controller 48 to which a key pad 47 that includes the previously described switches 11-18, is suitably connected so that, the recording of still pictures or of audio signals can be selectively controlled by suitable actuation of the switches of the key pad 47 as hereinafter described in detail. The liquid crystal display 10 is also shown to be connected to the system controller 48 so that the latter can provide various signals by which operating states of the camera are indicated by the display 10. A buzzer 46 is connected to the system controller 48 which, when the switch 16 is in its ON condition, causes the buzzer 46 to provide audible indications of various conditions.

An image pick-up element 49, such as, a CCD or MOS imaging element, has an image of an object or scene in the field of view of the camera projected thereon through a lens 50 and an adjustable iris 51. The output of the imaging element 49 is supplied through an amplifier 52 and a processing circuit 53 to a line sequencing circuit 54. The opening and closing of the adjustable iris 51 are controlled by an iris driving circuit 55 which responds to commands from the system controller 48. The imaging element 49 is operated by a driving circuit 56 which also responds to commands from the system controller 48. The line sequencing circuit 54 provides a luminance signal Y and line sequenced color difference signals (R-Y) and (B-Y) from a component color video signal output by the imaging element 49.

The line sequenced color difference signals (R-Y) and (B-Y) from the line sequencing circuit 54 are supplied through a pre-emphasizing circuit 57 to an FM modulator 58. The resulting frequency modulated line sequenced color difference signals (R-Y) and (B-Y) output from the FM modulator 58 are supplied to one input of an adder 59.

The luminance signal Y from the line sequencing circuit 54 is supplied through a pre-emphasizing circuit 60 to a contact a of a switch circuit 61 which has its moveable contact or output connected to an FM modulator 62. Therefore, when the switch circuit 61 is positioned or conditioned to engage its moveable contact with the contract a, the luminance signal Y from the pre-emphasizing circuit 60 is frequency modulated in the modulator 62 and then output from the latter to an input or moveable terminal of a switch circuit 63 which has a fixed contact a connected to another input of the adder 59. Thus, when the switch circuits 61 and 63 engage their respective contacts a, the luminance signal Y from the line sequencing circuit 54 is frequency modulated in the modulator 62 and then applied to the adder 59 for frequency-multiplexing by the latter in respect to the FM modulated line sequenced color difference signals (R-Y) and (B-Y) from the FM modulator 58.

The output of the adder 59 is supplied to a contact a of a switch circuit 64 which has its output connected to a recording amplifier 65 having its output connected to a contact a of a record/reproduce switch circuit 66 which is, in turn, connected to the magnetic head 44.

The switch circuits 61, 63 and 64 are controlled, by suitable control signals from the system controller 48 to engage the respective contacts a whenever a still picture video signal is to be recorded by the magnetic head 44 in a respective circular track on the magnetic disk 41. During audio signal recording, the switch circuits 61, 63 and 64 are changed-over by suitable control signals from the system controller 48 so as to engage respective contacts b in the switch circuits 61, 63 and 64. The switch circuit 66 is also suitably controlled by a control signal from the system controller 48 so as to engage its contact a as shown on Fig. 4B, during the recording of video or audio signals. The switch circuit 66 is changed-over to engage its contact b in response to a suitable control signal from the system controller 48 during the reproducing or playback of video or audio signals.

As further shown on Fig. 4A, the camera body 1 is provided with a strobe discharge tube 69 to which a charging circuit 70 is connected through a switch 70a which is controlled along with the charging circuit 70 by the system controller 48. A light sensitive photo-diode 71 is provided so that a current flowing through the diode 71 is dependent upon the amount of the ambient illumination and is detected by a current detector 72 providing an output supplied to the system controller 48.

As shown on Fig. 4A, the built-in microphone 3 and the jack 4 for connection to an external microphone 83 are respectively connected to contacts a and b of a switch 81 which is operative for selecting an audio input signal from either the built-in microphone 3 or the external microphone 83. A suitable switch detecting means 82 is associated with the switch 81 and supplies to the system controller 48 a signal indicating the state of the switch 81. The audio input signal from the switch 81 is supplied through an amplifier 84 to a high-pass filter 85 and then a low-pass filter 86, in sequence, for limiting the band of the audio signal passed through a noise eliminating compressor 87 to an A/D converter 88. A write clock generator 89 provides a sampling clock having a frequency fₛ to the A/D converter 88 and to an address counter 91 which is controlled by a respective output from the system controller 48, and which addresses a random access memory (RAM) 90 receiving the digitized output of the converter 88. During writing-in of a digitized audio signal from the converter 88 into the RAM 90 at addresses determined by the address counter 91, such addresses are incremented by the clock having the frequency fₛ. At the time of read out from the RAM 90 at addresses determined by the address counter 91, such addresses are incremented by a clock having a frequency 640 x fₛ which is provided by a read-out clock generator 92. Thus, the digitized audio signal read-out of the RAM 90 is time-base compressed prior to being supplied to a D/A converter 93 for conversion into an analog signal. The clock having the frequency 640 x fₛ from the read-clock generator 92 is also supplied to the D/A converter 93 with the result that the analog audio signal output from the converter 93 is time-base compressed to 1/640th of the time base of the original audio signal. The time-base compressed audio signal from the converter 93 is applied to one input of an adder 94 which, at another input thereof, receives flag and control code signals from a generator 95 therefor. Such flag and control code signals are indicative of connection information, as hereinafter described in detail, and are generated, in response to suitable control of the generator 95 by the system controller 48, so as to have a predetermined timing relative to the time-base compressed audio signal to which the flag and control code signals are added in the adder 94.

The output of the adder 94 is supplied through a pre-emphasis circuit 96 to the contact b of the switch circuit 61 so that, when the switch circuits 61, 63 and 64 are made to engage their respective contacts b by control signals from the system controller 48, the time-base compressed audio signal and associated flag and control code signals are frequency modulated by the modulator 62 and then passed through the switch circuits 63 and 64, and the recording amplifier 65 to the contact a of the switch circuit 66 which, in the audio recording mode, is also disposed as shown on Fig. 4B for supplying the frequency modulated, time-base compressed audio signal and associated flag and control code signals to the head 44 for recording by the latter on the magnetic disk 41.

The contact b of the switch 66 which is engaged in response to a suitable control signal from the system controller 48 for reproducing or playback of video and audio signals recorded on the disk 41 is connected to a playback amplifier 67 which has its output connected to a terminal 68 for connection to an input terminal of the reproducing adapter 21, as hereinafter described in detail. The circuit arrangement of the camera body 1 is further provided with an interface 97 through which the system controller 48 may be connected bi-directionally with a system controller of the reproducing adapter 21. The output of the playback amplifier 67 is further connected to a signal detector 98 which indicates to the system controller 48 whether or not a signal is recorded in a track of the magnetic disk 41 being scanned by the head 44 when the camera body 1 is in its reproducing mode, that is, has its switch 66 engaged with the contact b thereof. It is to be understood at this point that, although the camera body 1 can be employed alone for recording still picture video and audio signals in respective tracks on the magnetic disk 41, the camera body 1 cannot be used alone, that is, without connection to the reproducing adapter 21, for reproducing such signals.

### Circuit Arrangement of the Reproducing Adapter

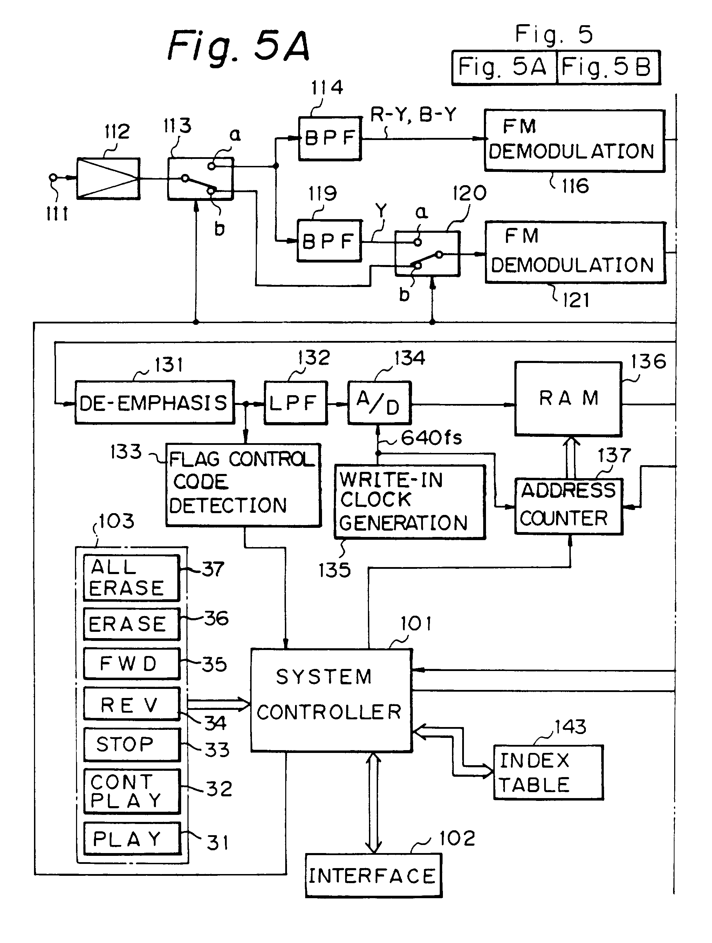

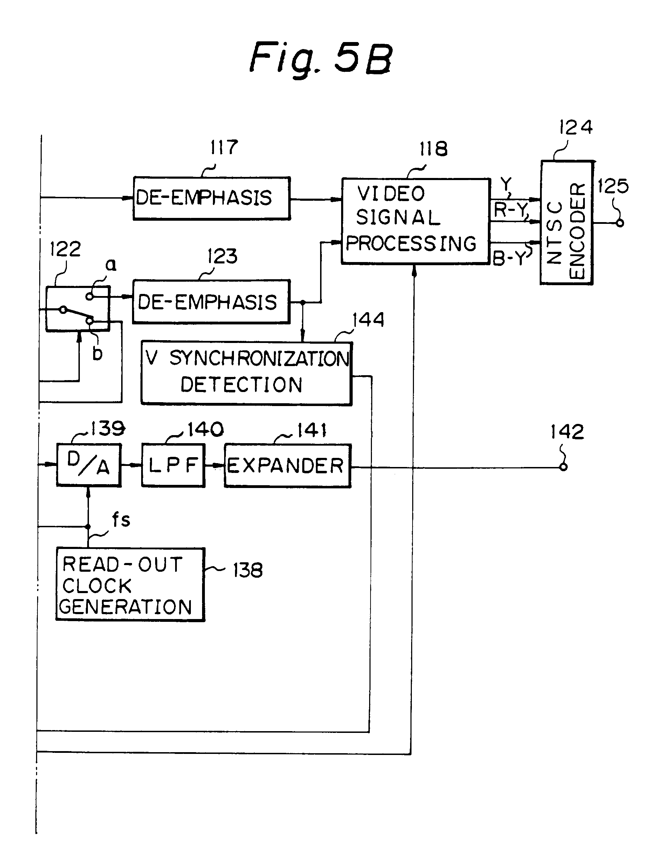

Referring now to Figs. 5A and 5B, it will be seen that the reproducing adapter 21 has a system controller 101 adapted to be connected bi-directionally through an interface 102 with the interface 97 of the camera body 1. Further, the push buttons 31-37 previously described with reference to Fig. 3 are shown on Fig. 5A to be incorporated in a key pad 103 suitably connected with the system controller 101. An input terminal 111 of the reproducing adapter is suitably connected with the output terminal 68 of the camera body 1, for example, through the cable 25 and connector 26 shown on Fig. 3 and the connector 5 shown on Fig. 1.

The output from the terminal 68 of the camera body 1, when applied to the input terminal 111 of the reproducing adapter 21 is supplied through an amplifier 112 to a switch circuit 113. The switch circuit 113, along with a switch circuit 120 and a switch circuit 122 are suitably controlled by the system controller 101 so as to engage respective contacts a during video signal reproduction, and to be changed-over to engage respective contacts b during audio signal reproduction.

During the reproducing of a video signal from the magnetic disk 41 by the head 4 within the camera body 1, the reproduced video signal applied to the input terminal 111 is a frequency divided multiplex of an FM modulated luminance signal Y and FM modulated line sequenced color difference signals (R-Y) and (B-Y). Such video signal from the input terminal 111 is supplied through the amplifier 112 and the switch circuit 113 to band-pass filters 114 and 119 connected in parallel to the contact a of the switch circuit 113. The band-pass filter 114 extracts the FM modulated line sequenced color difference signals (R-Y) and (B-Y) from the supplied video signal and supplies the same to an FM demodulator 116. The resulting demodulated line sequenced color difference signals (R-Y) and (B-Y) are supplied from the output of demodulator 116 through a de-emphasis circuit 117 to a respective input of a video signal processing circuit 118.

The band-pass filter 119 extracts the FM modulated luminance signal Y from the input reproduced video signal and supplies the same to the contact a of the switch circuit 120, and therefore through the latter to an FM demodulator 121. The resulting demodulated luminance signal Y is supplied from the demodulator 121 through the switch circuit 122 to a de-emphasis circuit 123 and thence to another input of the video signal processing circuit 118.

The video signal processing circuit 118 employs suitable delays (not shown) for achieving the simultaneous occurrence of the line sequenced color difference signals (R-Y) and (B-Y), and thereby forms component signals Y, (R-Y) and (B-Y) which are output from the circuit 118 to an NTSC encoder 124 which develops therefrom a composite color video signal according to the NTSC system. Such composite color video signal according to the NTSC system is provided to an output terminal 125 which, for example, may correspond to the output 27 on Fig. 3.

During the reproducing of an audio signal, the switch circuits 113, 120 and 122 are changed-over by the system controller 101 so as to engage their respective contacts b as shown on Figs. 5A and 5B. Thus, when a reproduced time-base compressed and FM modulated audio signal is supplied to the input terminal 111, such audio signal is transmitted to the FM demodulator 121 through the amplifier 112 and the switch circuits 113 and 120. The resulting FM demodulated audio signal output from the demodulator 121 is supplied through the switch circuit 122 to a de-emphasis circuit 131. The output of the de-emphasis circuit 131 is supplied to a low-pass filter 132 and a flag and control code detector 133. In response to the detection of flag and control code signals by detector 133, respective signals are applied from the latter to the system controller 101.

The output of the de-emphasis circuit 131 which passes through the LPF filter 132 is supplied to an A/D converter 134 which also receives a clock of a frequency 640 x fₛ from a write clock generating circuit 135. Thus, the A/D converter 134 samples the time-base compressed audio signal with a sampling frequency of 640fₛ. The digitized audio signal output by the converter 134 is written in a RAM 136 at addresses which are determined by an address counter 137 and incremented by the write-in clock having the frequency 640fₛ and being provided from the generator 135. During read out of the audio signal from the RAM 136, a clock having the frequency fₛ is supplied from a read-clock generating circuit 138 to the address counter 137 for incrementing the latter at that frequency. The read-out clock from the generator 138 is also supplied to a D/A converter 139 which receives the audio signal read out of the RAM 136 for converting the same to an analog audio signal.

It will be appreciated that, in response to writing of the reproduced audio signal in the RAM 136 with a write-in clock of 640fₛ and reading out the audio signal from the RAM 136 with a read-out clock of fₛ, the reproduced audio signal which had been time-base compressed as recorded, is restored or expanded to its original time-base. The output of the D/A converter 139, that is, the reproduced audio signal restored to its original time-base, is supplied through a low-pass filter 140 and an expander 141 to an output terminal 142 which may be connected to an audio circuit of a monitor receiver or the like.

When reproducing an audio signal by means of the reproducing adapter 21, it is necessary to provide information identifying the signals recorded in the several tracks on the disk 41, and such information is recorded on an index table 143 (Fig. 5A) which communicates with the system controller 101. For producing such index table 143, information is obtained through the system controller 101 from the flag and control code detecting circuit 133, and from a vertical synchronization detector 144 which is connected to the output of the de-emphasis circuit 123 so as to detect the vertical sync signal in the demodulated luminance signal when a video signal is being reproduced. The vertical synchronization detector 144 is also connected to the system controller 101 for providing the latter with the results of the vertical sync signal detection.

### Program Executed by the System Controller 48 of the Camera Body 1 When Used Alone in the After-Recording Mode

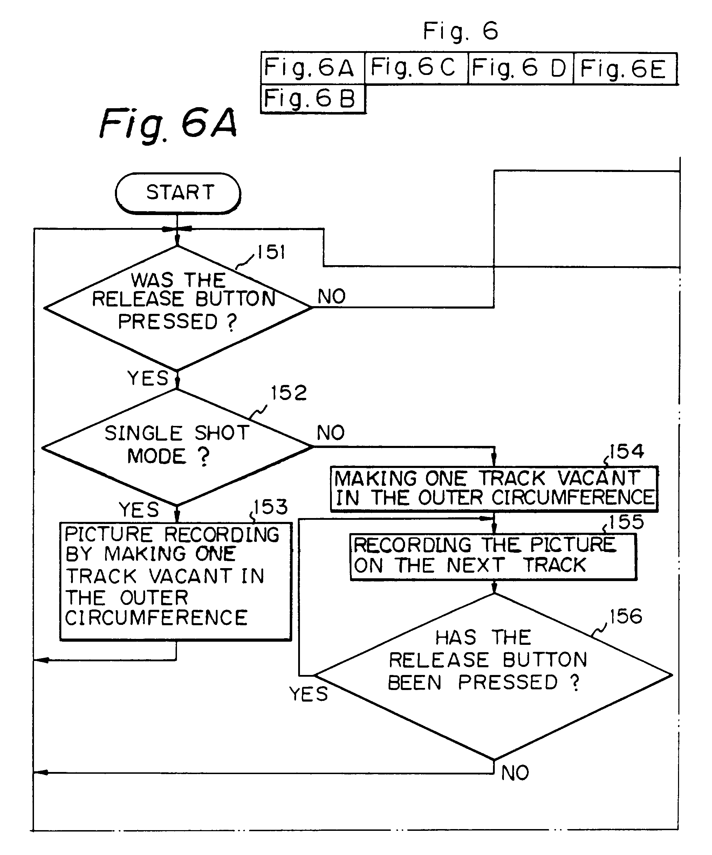

The system controller 48, which may be constituted by a suitable microcomputer, performs the program illustrated by the flow chart of Figs. 6A-6E when the switch 11 of the camera body 1 is positioned to select the "after-recording" mode and the camera body 1 is employed alone, that is, without connection to the reproducing adapter 21.

When a "single shot" mode is selected by the switch 14, still pictures are taken one-by-one each time the release button 18 is depressed, and the video signal of each still picture is recorded in a respective circular track on the magnetic disk 41. If the switch 11 is positioned for selecting the "after-recording" mode at the time of the recording of the still pictures, a vacant track for associated audio signals is reserved beside the outer circumference, that is, at the radially outer side of each track in which a video signal is recorded in the single shot mode. Thereafter, an audio signal which explains or otherwise is associated with a still picture recorded in a track on the disk can be after-recorded in the next adjacent vacant track with the duration of such after-recorded audio signal being limited to 9.6 seconds.

On the other hand, when the rotary switch 14 is positioned to select the "continuous shots" mode and the release button 18 is continuously depressed, successive still pictures are recorded in respective circular tracks on the magnetic disk 41 starting from the outer circumference of the latter and proceeding radially inward track-by-track toward the center. However, if the switch 11 is positioned to select the "after-recording" mode at the time of the recording of the still pictures in the continuous shots mode, then one track which lies beside the outer circumference of the video track first recorded in the continuous shots mode is maintained vacant so as to be later available for the after-recording of audio signals therein. An audio signal explaining or otherwise associated with the still pictures recorded in the continuous shots mode can be after-recorded in the vacant track which has been reserved for the audio signal or signals, and in this case again the maximum duration of the audio signal to be after-recorded is 9.6 seconds.

More specifically, and as shown in Fig. 6A, at the start of the program it is determined, in a step 151, whether or not the release button 18 has been pressed for initiating the recording of a still picture video signal. If the release button 18 has been pressed, that is, if a YES answer is obtained in step 151, the program proceeds to the next step 152 in which it is determined whether or not the single shot mode has been selected. If the single shot mode has been established, that is, if a YES answer is obtained in step 152, the program proceeds to a step 153 in which a vacant track is reserved on the disk and the still picture video signal then obtained from the imaging element 49 is recorded in the next radially inward track on the magnetic disk 41. In other words, the still picture video signal is recorded in a track on the disk 41 in the single shot mode only after a vacant track has been reserved at the outer circumference of the track receiving the recorded video signal.

If the continuous shots mode has been selected by the switch 14 at the time when the release button 18 is pressed, a NO answer is obtained in step 152 and the program proceeds to a step 154 in which a vacant track is reserved at the radially outer circumference of the area on the disk 41 in which video signals are to be recorded in the continuous shots mode and then, in the next step 155, a still picture video signal is recorded in the next radially inward track on the disk 41. Thereafter, in a step 156, it is determined whether or not the release button 18 is still pressed. If a YES answer is obtained in step 156, the routine returns to step 155 in which another still picture video signal is recorded in the next radially inward track on the disk 41. Therefore, the steps 155 and 156 are repeated until the button 18 is released or no longer pressed, that is, until a NO answer is obtained in step 156.

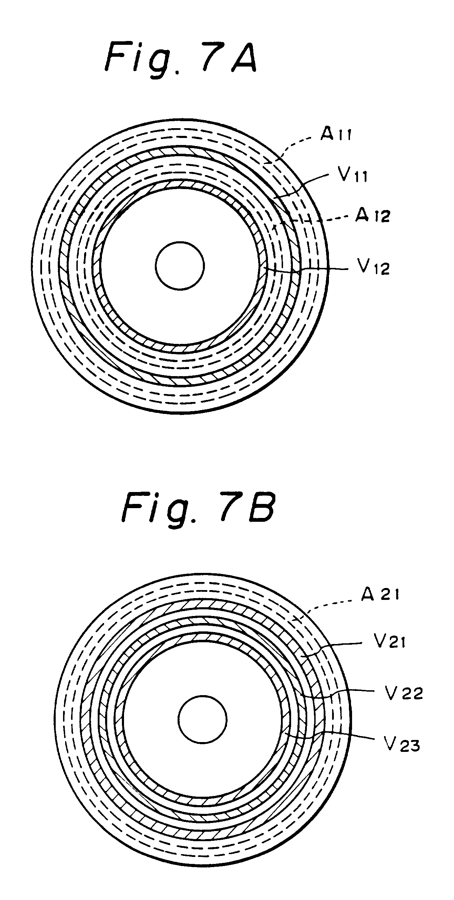

As a result of the foregoing, and as shown in Fig. 7A, when recording still picture video signals in the single shot mode at a time when the after-recording mode has been established, vacant tracks A₁₁, A₁₂, ... for the after-recording of audio signals are provided beside the outer circumferences of the tracks V₁₁, V₁₂, ..., respectively, in which the still picture video signals are recorded. Since the tracks V₁₁, V₁₂, ... in which the video signals are recorded in succession are arranged in a radially inward order, that is, in an order from the outer circumference of the disk toward the center thereof, it will be apparent that, in accordance with the present invention, each of the vacant tracks A₁₁, A₁₂, ... reserved for the after-recording of audio signals is disposed at the outer circumferential side of the respective video track, that is, at the side facing radially outward.

Further, as shown in Fig. 7B, when still picture video signals are recorded in the continuous shots mode at a time when the after-recording mode has been established, a vacant track A₂₁ for the after-recording of audio signals is reserved at the outer circumference of the video recording track V₂₁, that is, the first of the tracks V₂₁, V₂₂, V₂₃, ... in which the still picture video signals are successively recorded so long as the release button 18 is depressed.

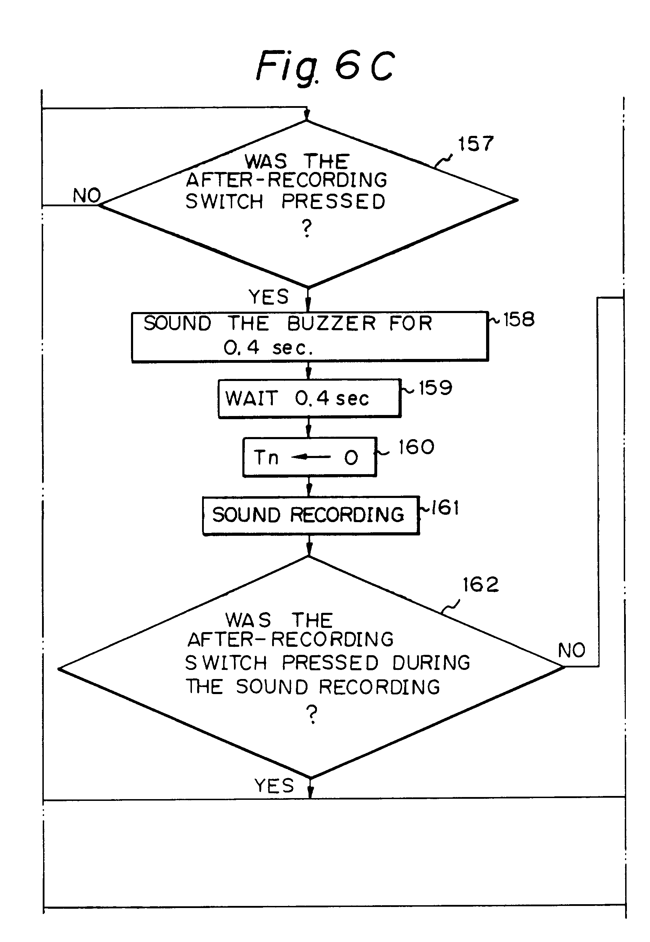

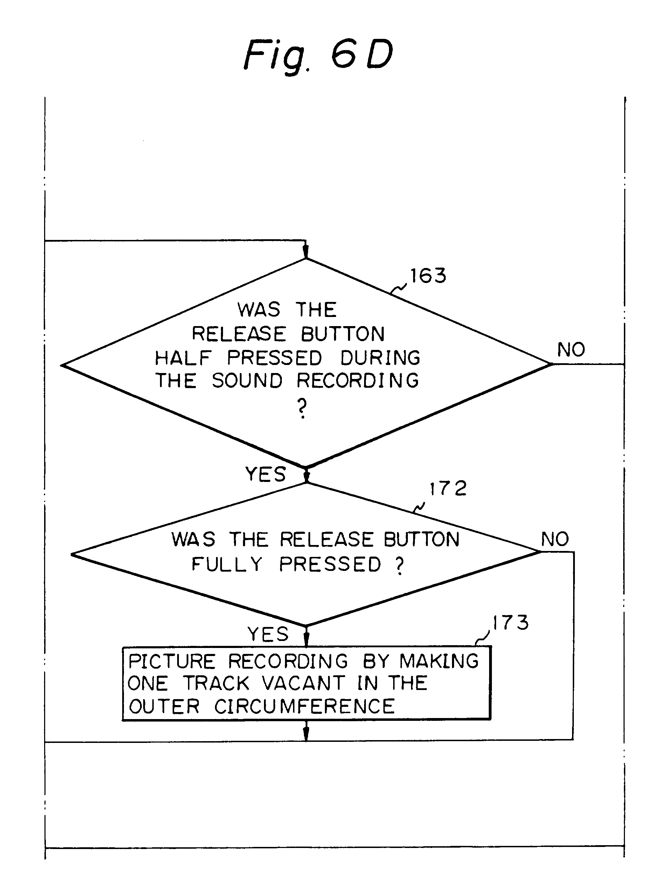

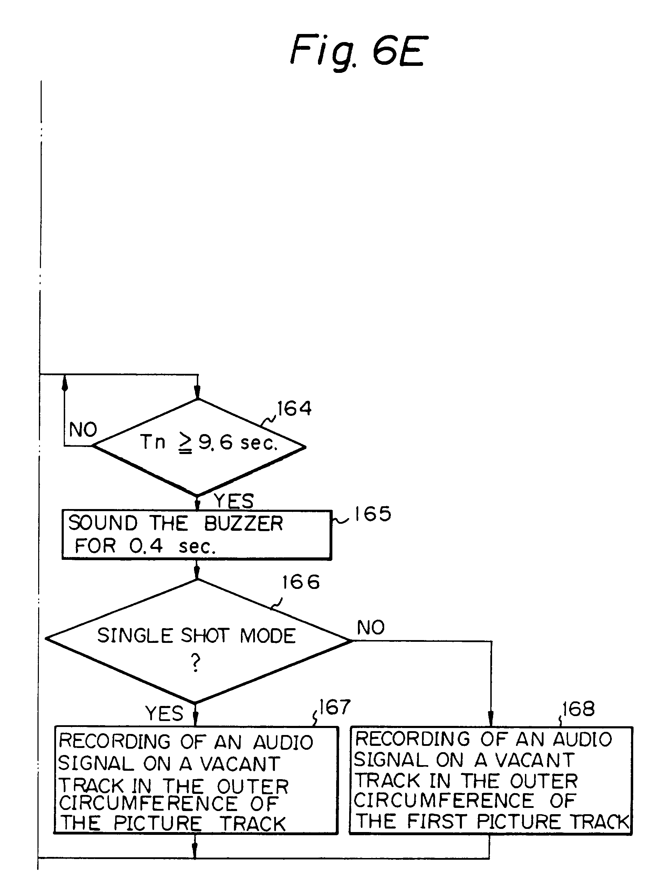

If it is determined in step 151 that the release button 18 is not pressed (Fig. 6A), that is, the camera body 1 is not engaged in recording a still picture video signal, the routine proceeds to a step 157 (Fig. 6C) in which it is determined whether or not the after-recording switch 12 is pressed. If the after-recording switch 12 is not pressed, the program returns to the start thereof. However, if the after-recording switch 12 is pressed, the program proceeds from step 157 to a step 158 in which the buzzer 46 is operable for 0.4 second for indicating that audio recording is about to start. However, the actual start of the after-recording following the pressing of the switch 12 is delayed for 0.4 seconds in a step 159 so that the sound of the buzzer 46 will not be recorded. At the conclusion of such waiting period of 0.4 seconds, a sound-recording time Tn is set to 0 in a step 160 and audio recording is initiated in a step 161 by storing the audio signal in the RAM 90. During such audio recording, it is determined in a step 162 whether or not the after-recording switch 12 has been pressed again. If a NO answer is obtained in step 162, that is, if the after-recording switch 12 has not been pressed again during the audio signal storage in the RAM 90, the routine proceeds to a step 163 (Fig. 6D) in which it is determined whether or not the release button 18 has been half-pressed during the audio recording, as would be the case if the camera body 1 was being returned to its standby state for the recording of a still picture. If the release button 18 has not been pressed during the sound recording, that is, if a NO answer is obtained in step 163, it is determined in a step 164 (Fig. 6E) whether or not the audio recording time Tn has reached 9.6 seconds which, for example, is the maximum duration of the audio signals that can be temporarily stored in the RAM 90 (Fig. 4B) in the course of the time-base compression of the audio signal prior to its recording in a respective track on the disk 41.

When the sound-recording time Tn has reached 9.6 seconds, that is, when a YES answer is obtained in step 164, the buzzer 46 is again sounded in a step 165 for a period of 0.4 seconds, thereby indicating the maximum audio-recording time has elapsed. It is then determined, in a step 166, whether the single shot mode or the continuous shots mode is established. If the single shot mode is established, that is, a YES answer is obtained in step 166 (Fig. 6E), an audio signal temporarily stored in the RAM 90 is read-out therefrom in the next step 167 and is recorded in a vacant track beside the outer circumference of a track in which an associated still picture video signal has been previously recorded in the single shot mode. If a NO answer is obtained in step 166, that is, if the continuous shots mode is established, the routine proceeds to a step 168 in which the audio signal stored in the RAM 90 is recorded in a vacant track provided radially outside the first of the tracks in which the still picture video signals were successively recorded in the continuous shots mode.

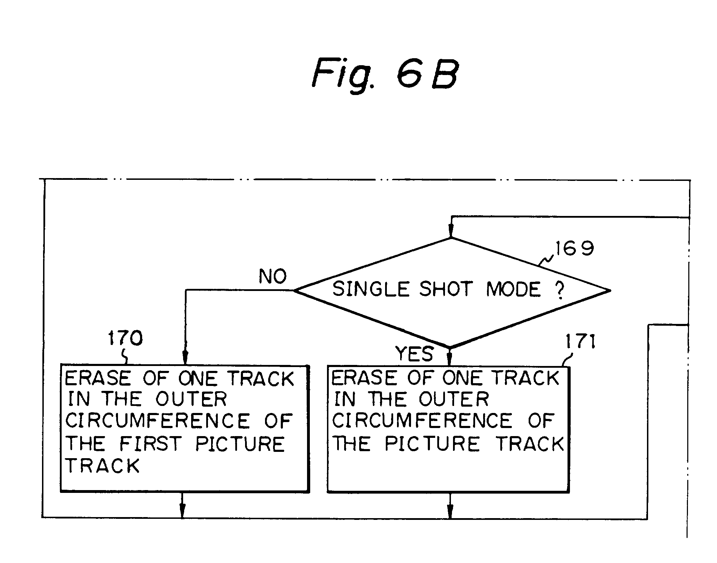

The after-recording of the audio signal is interrupted or aborted if, during the audio-recording operation, either the after-recording switch 12 or the release button 18 is pressed. More specifically, if a YES answer is obtained at the step 162 (Fig. 6C), that is, it is determined that the after-recording switch 12 is pressed during recording of the audio signal in the RAM 90, the program proceeds to a step 169 (Fig. 6B) in which it is determined whether or not the single shot mode is established. If the continuous shots mode is established, that is, if a NO answer is obtained in step 169, one track adjacent the outer circumference of the first track in which video signals were recorded in the continuous shots mode is erased. If the single shot mode is established, that is, if a YES answer is obtained in step 169, one track at the outer circumference of the track in which a still picture video signal was recorded in the single shot mode is erased in a step 171. Thus, in either step 170 or step 171, the track on the disk 41 in which audio signals were to be after-recorded at the time of the aborting or interruption thereof is completely erased.

If a NO answer is obtained at step 162, that is, if it is determined that the after-recording switch 12 was not pressed again during the audio recording operation, and if, in the succeeding step 163, a YES answer is obtained, that is, it is determined that the release button 18 was at least lightly pressed or half-depressed during the audio recording, the routine proceeds to a step 172 (Fig. 6D) in which it is determined whether or not the release button 18 was fully depressed during the audio recording. If a NO answer is obtained in step 172, that is, the release button 18 was only lightly pressed or half-depressed during the audio recording for establishing the standby state of the camera, the program proceeds to the step 169, and from there to the step 170 or step 171, so as to erase the track in which audio signals were to be recorded at the time the release button 18 was partly or half-depressed for establishing the stand-by state of the camera body 1.

However, if a YES answer is obtained in step 172, that is, it is determined that the release button 18 has been fully depressed during an audio recording operation, a still picture video signal is recorded in a step 173 and, at the same time, a vacant track, or a track reserved for the recording of an audio signal, is provided at the outer circumference of the track in which the video signal is being recorded, and then the routine proceeds to the previously described steps 169, 170 and 171 for erasing any audio signal or signals partly recorded in a track at the time that the audio recording operation was interrupted or aborted.

In other words, if a photo-opportunity occurs during the after-recording of audio signals, the release button 18 may be fully depressed and, in that case, the recording of a still picture video signal is given priority over the after-recording of the audio signal.

### Program Executed by the System Controller 48 of the Camera Body 1 When Used Alone in the Simultaneous Recording Mode

When the switch 11 is positioned for establishing the "simultaneous recording" mode, a still picture video signal is recorded in a respective circular track on the disk 41 each time the release switch 18 is fully depressed. During each such recording of a still picture video signal in a track on the disk 41, a vacant track is reserved at the outer circumference of the track in which the video signal is being recorded. Simultaneously with the recording of a still picture video signal in a respective video track, an audio signal is input to the RAM 90 so as to be ready to be read therefrom and recorded in the previously provided vacant track immediately following the recording of the associated still picture. Once again, 9.6 seconds is the maximum duration of the sound that can be recorded in association with a recorded still picture video signal in the simultaneous recording mode.

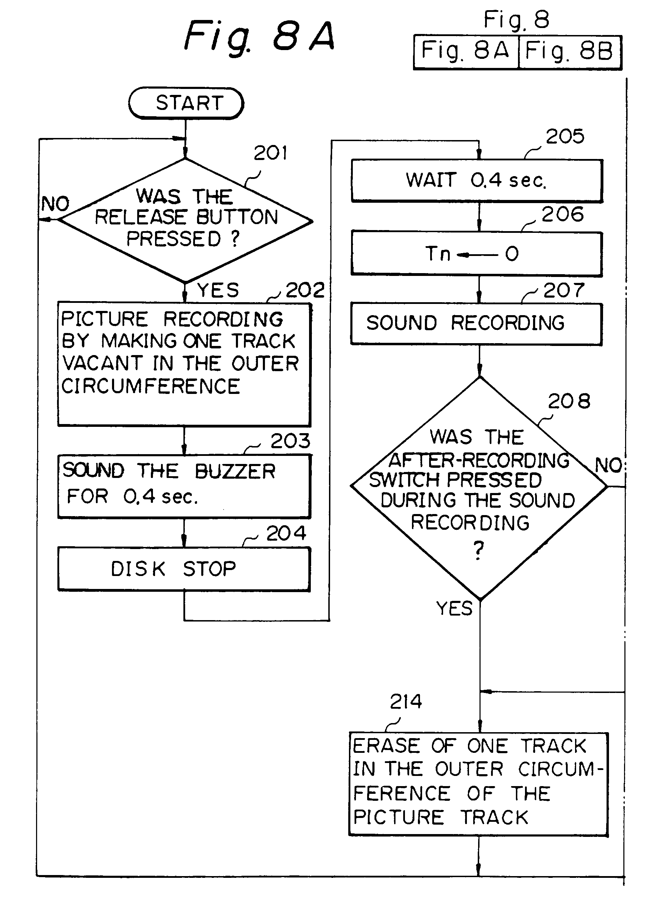

More specifically, as shown in Fig. 8A, when the "simultaneous recording" mode is selected by means of the switch 11, it is determined in the initial step 201 whether or not the release button 18 is depressed. If the release button 18 is not depressed, the routine returns to the start. If a YES answer is obtained at step 201, that is, if the release button 18 is depressed, the recording of a still picture video signal is effected in a step 202 with a vacant track being reserved or maintained at the outer circumference of the track in which the video signal is recorded. Then, the buzzer 46 is made to operate for 0.4 seconds in a step 203 and, at the completion of the recording of a still picture video signal in a respective track, the rotation of the disk 41 is halted in a step 204. After a waiting period of 0.4 seconds detected in a step 205, and which is provided to ensure that the disk is actually stopped, the sound-recording time Tn is reset to 0 in a step 206. Thereupon, in a step 207, an audio signal provided by the built-in microphone 3 or the external microphone 83 is written in or stored in the RAM 90. During such recording or storing of the audio signal in the RAM 90, it is determined, in a step 208, whether or not the after-recording switch 12 has been pressed. If a YES answer is obtained at step 208, that is, if the after-recording switch 12 has been pressed during the recording of the audio signal in the RAM 90, the program proceeds to a step 214 in which the recording of an audio signal in a track at the outer circumference of the last recorded video track is aborted and any audio signal recorded in such audio track is erased therefrom.

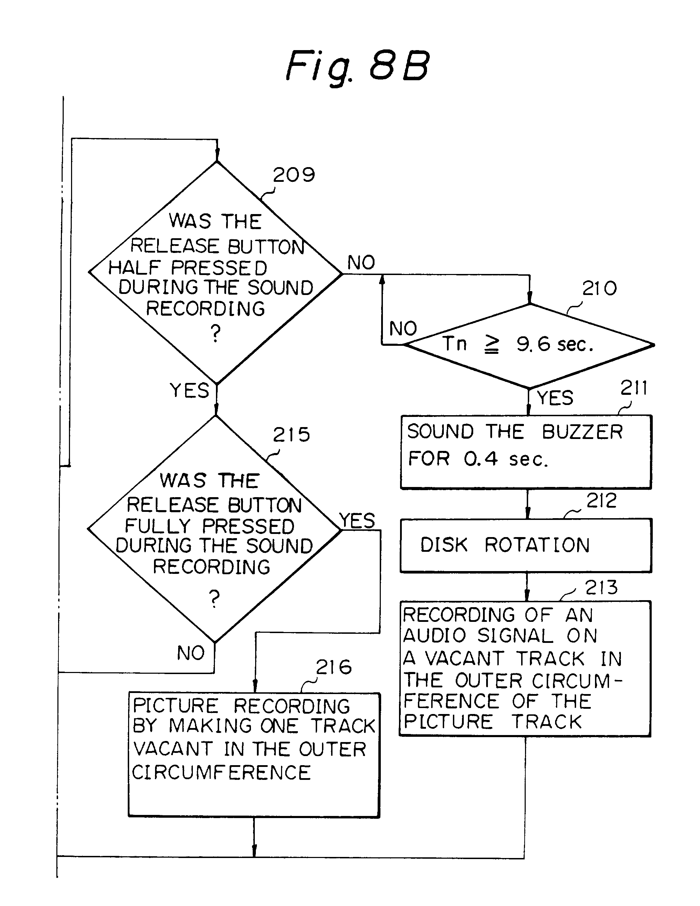

If a NO answer is obtained at step 208, that is, if the after-recording switch 12 has not been pressed during the storing or recording of an audio signal in the RAM 90, the program proceeds to a step 209 (Fig. 8B) in which it is determined whether or not the release button 18 has been at least partly depressed during such storing of the audio signal. If a YES answer is obtained at step 209, that is, if the release button 18 was partly depressed for establishing the stand-by state of the camera body 1 for the recording of still pictures, the program proceeds to a step 215 in which it is further determined whether or not the release button 18 was fully pressed during the storing of an audio signal in the RAM 90. If a NO answer is obtained at step 215, the program proceeds to step 214 in which, as previously indicated, any audio signal recorded in the track at the outer circumference of the track in which a still picture was last recorded is fully erased.

On the other hand, if a YES answer is obtained at step 215, that is, if the release button 18 was fully depressed during the storing of an audio signal in the RAM 90, the program proceeds to a step 216 in which the recording of the audio signal is aborted and a still picture is recorded in a track on the magnetic disk 41 while simultaneously reserving a vacant track at the outer circumference of the track in which the still picture is then recorded. Thus, once again, when the simultaneous recording mode is selected, preference is given to the recording of a still picture. Therefore, if a desired photo-opportunity arises during the recording of an audio signal, the release button 18 may be fully depressed to abort the recording of the audio signal and to immediately record a still picture of such photo-opportunity.

If neither the after-recording switch 12 nor the release button 18 is at all depressed during the storing or recording of an audio signal in the RAM 90, that is, if a NO answer is obtained at step 209, the program proceeds to a step 210 in which it is determined whether or not the duration of the audio signal being written in the RAM 90 has reached 9.6 seconds. When a YES answer is obtained in step 210, that is, when the duration of the audio signal stored in the RAM 90 has reached 9.6 seconds, the buzzer 46 is made to operate for 0.4 seconds in a step 211 and, at the conclusion thereof, the disk 41 is again rotated in a step 212. During such rotation of the disk 41, the audio signal is read out of the RAM 90 in a time-base compressed condition and, in a step 213, is recorded in the vacant track at the outer circumference of the track in which a still picture was last recorded.

Thus, when the simultaneous recording mode is selected, each still picture is recorded in a respective track on the disk 41 while a vacant track is reserved at the outer circumference of such still picture track, and, at the completion of the recording of the still picture, the rotation of the disk is halted while an associated audio signal is stored in the RAM 90 to be read therefrom in a time-compressed manner when the disk 41 is again rotated and the time-compressed audio signal is recorded in the vacant track provided therefor. By reason of the foregoing, any noise resulting from the rotation of the disk is excluded from the audio signal to be recorded on the respective track of the disk.

### Program Performed in the After-Recording Mode When the Camera Body 1 is Employed in Connection with the Reproducing Adapter 21

An after-recording operation can be performed with the camera body 1 connected with the reproducing adapter 21 when the switch 11 is positioned to select either the after-recording mode or the simultaneous recording mode, and the reproducing adapter is conditioned to effect manual frame sending, for example, in response to actuation of the push-button 31 (Fig. 5A) by which reproducing of the recorded still pictures one at a time is effected. If the audio signal which is to be after-recorded is obtained from the external microphone 83 connected to the jack 4, such audio signal can be recorded while the corresponding or associated still picture is being reproduced without the danger that the rotation of the disk 41 will give rise to noise recorded with the audio signal. However, if the built-in microphone 3 is used as the source of the audio signal to be after-recorded, the rotation of the disk 41 is halted during the writing or storing of the audio signal in the RAM 90 so that the associated still picture is muted or is not reproduced at such time. The foregoing is to ensure that any noise resulting from the rotation of the disk 41 will not be mixed with the audio signal to be recorded when the built-in microphone 3 is used as the source of such audio signal.

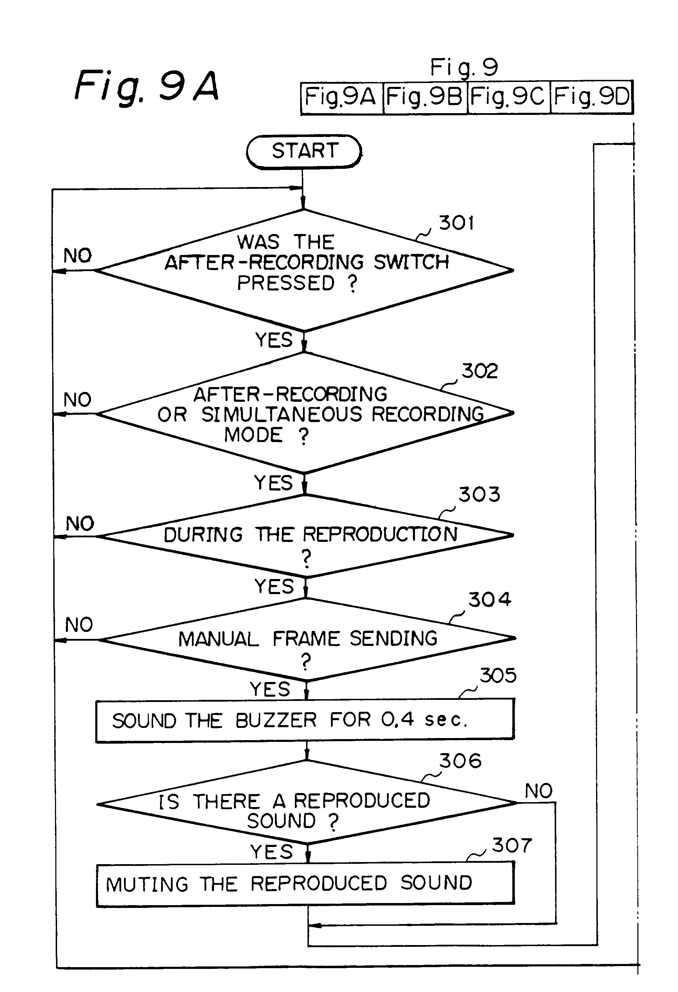

More specifically, and as shown in Fig. 9A, when performing after-recording of an audio signal with the camera body 1 connected with the reproducing adapter 21, it is initially determined in step 301 whether or not the after-recording switch 12 has been depressed. If a YES answer is obtained in step 301 the program proceeds to a step 302 in which it is determined whether or not the switch 11 is positioned for selecting either the "after-recording" mode or the "simultaneous recording" mode. If either the "after-recording" mode or the "simultaneous recording" mode has been selected, the program proceeds to a step 303 in which it is determine whether or not a video signal is then being reproduced. If a YES answer is obtained in step 303, it is determined in step 304 whether such video reproducing is in the form of manual frame sending, that is, reproducing of one frame of the video signal at a time, as by actuation of the push-button 31. If it is determined that manual frame sending is occurring, the buzzer 46 is operated in a step 305 for 0.4 seconds following the initial actuation of the after-recording switch 12 in step 301. At this time, it is determined in a step 306 if any sound is being reproduced. If sound is being reproduced, such sound is muted in the following step 307, and then the program proceeds to a step 308 in which it is determined whether or not the external microphone 83 is connected to the respective jack 4.

If the external microphone 83 is connected to the jack 4, that is, the after-recording is effected with audio signals derived from the external microphone, a YES answer is obtained at step 308, and the program proceeds to a step 309 in which there is a 0.4 second delay, and then to a step 310 in which the sound-recording time Tn is set at 0. Thereupon, an audio signal derived from the external microphone 83 connected to the jack 4 is stored or written in the RAM 90 in a step 311.

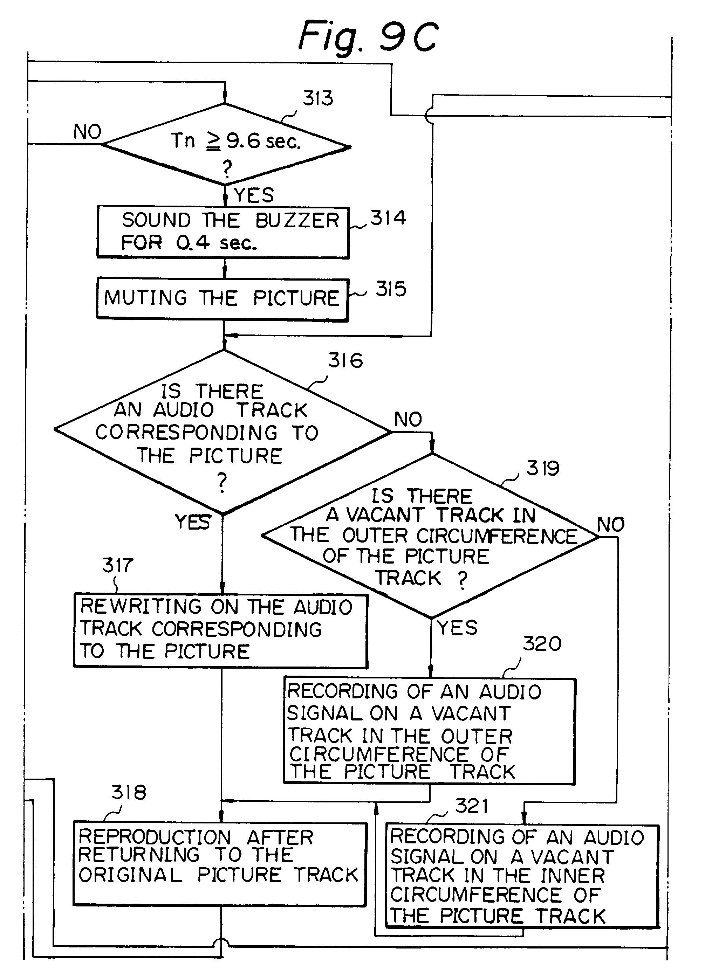

In the next step 312 it is determined whether or not the after-recording switch 12 was pressed during such writing or storing of the audio signal in the RAM 90. If a NO answer is obtained at step 312, that is, if the after-recording switch 12 was not pressed during the storing of the audio signal, the program proceeds to a step 313 (Fig. 9C) in which it is determined whether or not the sound-recording time Tn has reached 9.6 seconds. When the sound-recording time Tn reaches 9.6 seconds, the buzzer 46 is operated in step 314 for a period of 0.4 seconds and then the reproduced still picture is muted in a step 315. In the next step 316, it is determined whether or not there is an audio track corresponding to the still picture being reproduced. If a YES answer is obtained at step 316, that is, if there is an audio track corresponding to the still picture being reproduced, the program proceeds to a step 317 in which the audio signal stored in the RAM 90 is read therefrom and re-recorded in the audio track corresponding to the video track containing the associated still picture. After completion of the re-recording of the audio signal, the program returns, in a step 318, to the reproduction of the still picture video signal recorded in the original video track.

If a NO answer is obtained at the step 316, that is, if it is determined that there is no recorded audio track corresponding to the still picture being reproduced, it is then determined, in a step 319, if there is a vacant track at the outer circumference of the video track from which the still picture is being reproduced. If a YES answer is obtained in step 319, the audio signal stored in the RAM 90 is read therefrom in a step 320 and recorded in the vacant track at the outer circumference of the video track in which the reproduced still picture is recorded. Thereupon, the program proceeds to the step 318 in which reproduction of the still picture from the video track is again effected.

However, if it is determined in step 319 that no vacant track exists at the outer circumference of the video track containing the reproduced still picture, the program proceeds to a step 321 in which the audio signal read out of the RAM 90 is recorded in a vacant track located radially inward of the video track containing the still picture which has been reproduced. Once again, after the recording of the audio signal in step 321, the program proceeds to step 318 in which reproduction of the still picture from the originally considered video track is again effected.

It will be apparent from the foregoing that, so long as it is determined, in step 308, that the external microphone 83 is connected and is the source of the audio signal to be after-recorded, such after-recording of the audio signal is effected without halting the rotation of the disk 41 even during the writing or storing of the audio signal in the RAM 90. Therefore, an audio signal can be after-recorded while the corresponding recorded still picture is being reproduced and observed on the screen of a monitor receiver connected with the reproducing adapter 21.

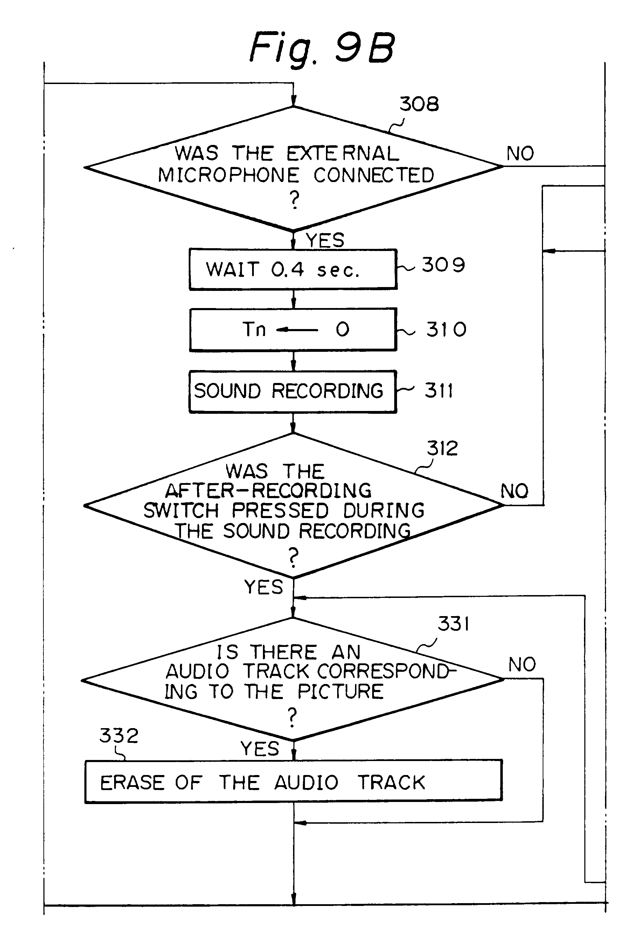

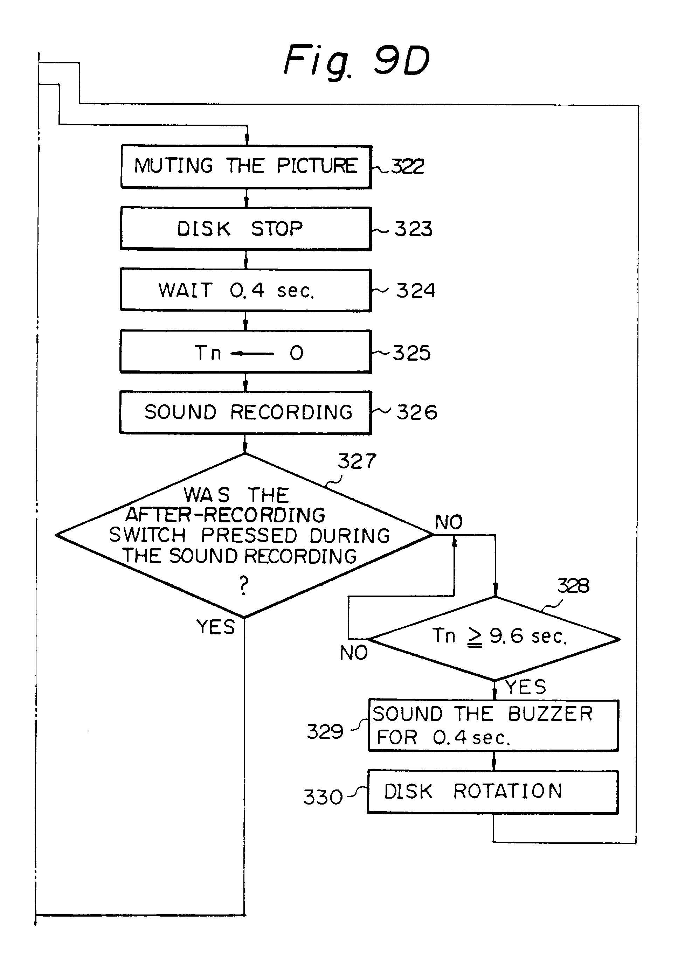

If it is determined at step 308 (Fig. 9B) that the external microphone 83 is not connected to the jack 4, the program proceeds to a step 322 (Fig. 9D) in which the reproduced still picture is immediately muted, and then the rotation of the disk 41 is stopped in a step 323. After a wait of 0.4 seconds in a step 324 for ensuring that rotation of the disk 41 has halted, the sound-recording time Tn is reset to 0 in a step 325, and then the writing or storing of the audio signal from the internal microphone 3 in the RAM 90 is effected in a step 326. During such storing or writing of the audio signal in the RAM 90, it is determined, in a step 327, whether or not the after-recording switch 12 has been pressed or actuated. If a NO answer is obtained in step 327, that is, if the switch 12 has not been pressed during the writing or storing of the audio signal in the RAM 90, that writing or storing operation continues until it is determined, in a step 328, that the audio recording time has reached 9.6 seconds. At that time, the buzzer 46 is operated for 0.4 seconds in a step 329, and then, in a step 330, the disk 41 is again rotated while the audio signal stored in the RAM 90 is read therefrom. The program is shown to return from the step 330 to the step 316 so that the audio signal being read from the RAM 90 is suitably recorded in a track on the rotated disk, as has been previously described with reference to the steps 316-321.

A case may arise in which the recording of the audio signal in the after-recording mode is aborted, for example, by pressing the after-recording switch 12 during the period when the audio signal from the external microphone 83 or from the built-in microphone 3 is being written or stored in the RAM 90. In such case, that is, if it is determined at step 312 or at step 327 that the after-recording switch 12 has been pressed, the program proceeds to a step 331 (Fig. 9B) in which it is determined whether or not there is a recorded audio track corresponding to the video track being considered. If such recorded audio track is found to exist in step 331, the program proceeds to a step 332 in which the recorded audio track is erased, and thus would be available in a subsequent after-recording operation for receiving an audio signal associated with the respective still picture video signal.

### Recording Format of the Audio Signal

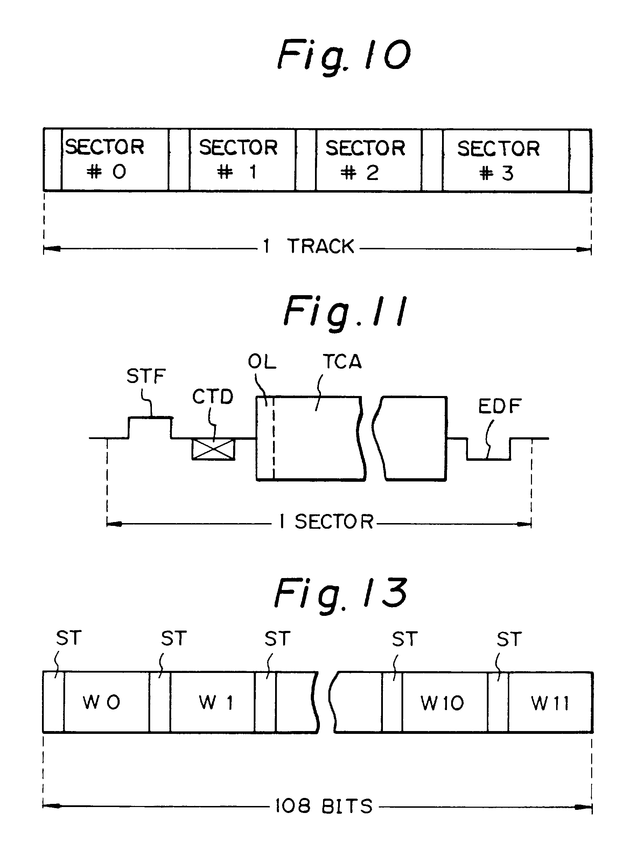

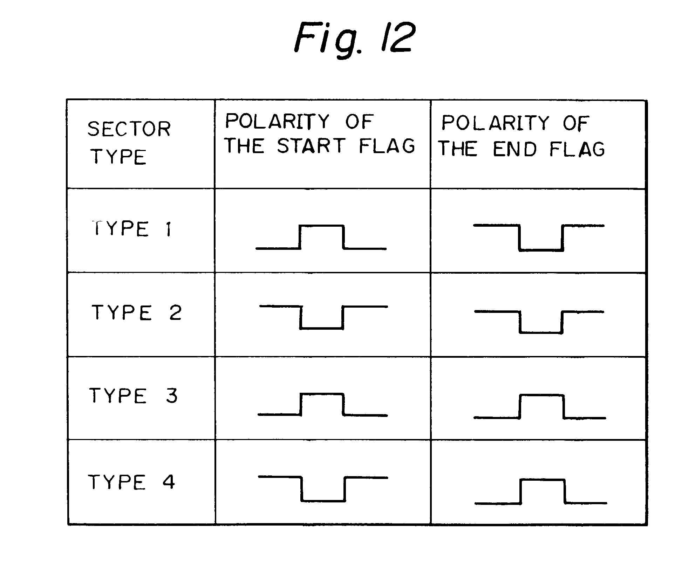

Referring now to Fig. 10, it will be seen that, when the time-base compressed audio signal is read from the RAM 90, such audio signal is recorded in one of four sectors #0 to #3 into which the respective audio track on the disk 41 is divided. As shown in Fig. 11, in each of the sectors #0 to #3, there are recorded a time-base compressed audio signal TCA, and a start flag STF, a control code CTD and an end flag EDF which are added to the audio signal. As is further shown on Fig. 11, the time-base compressed audio signal TCA has, at its head or leading end, an overlapping portion OL which is the same as the last audio signal appearing in a prior sector in the case of a continuous sequence of audio signals.

The sectors recorded in each audio track may be any of four types identified as TYPES 1, 2, 3 and 4. The TYPE 1, TYPE 2 and TYPE 3 sectors all have audio signals recorded therein, while no audio signal is recorded in a sector identified as TYPE 4. Each TYPE 1 sector has recorded therein an audio signal which is an initial or intermediate portion of a continuous sequence of audio signals having at least another portion thereof recorded in another sector in the same track. Each TYPE 2 sector has recorded therein an audio signal which is also an initial or intermediate portion of a continuous sequence of audio signals, but is the last such portion of that sequence to be recorded in the respective audio track. Thus, the sequence of an audio signal recorded in a TYPE 2 sector is continued by an audio signal recorded in the first sector #0 in another audio track. Each TYPE 3 sector has recorded therein an audio signal which constitutes the end or conclusion of a continuous sequence of audio signals.

The various types of sectors are identified by the respective start flags STF and end flags EDF, as shown on Fig. 12. Thus, each TYPE 1 sector has its start flag STF at a high level, while the end flag EDF is at a low level, whereas, each TYPE 2 sector has its start flag STF at a low level and its end flag EDF also at a low level. On the other hand, in the case of each TYPE 3 sector, both the start flag STF and the end flag EDF are at a high level and, in the case of a TYPE 4 sector, the start flag STF is at a low level and the end flag EDF is at a high level.

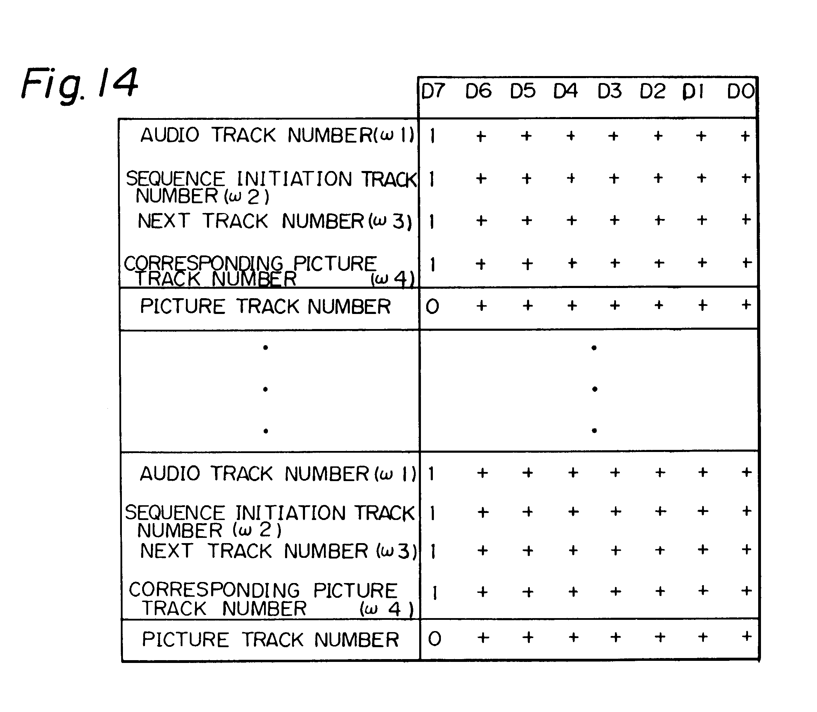

The content of the control code CTD will now be described in detail with reference to Fig. 13 in which it is shown that the control code is composed of 108 bits. These 108 bits are constituted by nine data words W1 - W9, each comprised of 8 bits, CRC codes W10 and W11 aggregating 16 bits, an 8 bit synchronization code W0, and 12 start bits ST each formed of one bit allotted to a respective one of the words W0 - W11. The data words W1 - W9 are employed for recording various kinds of information, such as, the number of the track in which the respective sector is situated, the track number of a sector in which there is recorded the head end or beginning portion of a continuous sequence of audio signals that includes the audio signal recorded in the respective sector, the track number of a sector in which the next audio signal of the continuous sequence is recorded, the track number in which the corresponding still picture video signal is recorded, the playback mode to be employed, the ratio of the time-base compression used when recording the audio signal, an optional or user code, the date and the like.

More specifically, in a control code CTD provided according to the present invention, the word W0 is the synchronization code, the word W1 is the track number, the word W2 is the track number of the sector in which the head of the continuous sequence of audio signals is recorded, the word W3 is the track number of the sector in which the next audio signal of the continuous sequence is recorded, the word W4 is the track number in which corresponding still picture video signal is recorded, the word W5 is not in use, the word W6 indicates the playback mode, the ratio of the time-base compression of the audio signal at the time of its recording and the option code, the words W7, W8 and W9 indicate the day, month and year when the recording occurred, and the words W10 and W11 are the CRC codes.

### Producing an Index Table

When the magnetic disk 41 having recorded thereon a still picture video signal and an audio signal in the above described format is to be reproduced, it is necessary to first provide an index table therefor. The index table is produced by the system controller 101 in a read/write memory 143 (Fig. 5A) of the reproducing adapter 21 when the latter is connected with the camera body 1 and one of the following conditions is fulfilled:

Condition 1: The magnetic disk cassette 7 is loaded in the camera body 1 connected to the reproducing adapter 21, and a battery is then installed in either the camera body 1 or the reproducing adapter 21.

Condition 2: A battery is installed in one or both of the camera body 1 and the reproducing adapter 21 which are connected to each other, and then the magnetic disk cassette 7 is loaded in the camera body 1.

Condition 3: A battery is installed in one or both of the camera body 1 and the reproducing adapter 21 with the magnetic disk cassette 7 loaded in the camera body 1, and then the camera body 1 and the reproducing adapter 21 are connected to each other.

The system controller 101 is programmed to produce the index table 143 in response to flag and control code information obtained from the detector 133 as hereinafter described whenever the program is initiated by the attainment of one of the above Conditions 1, 2 or 3. For producing the index table, each track on the magnetic disk 41 is initially reproduced and it is determined whether the resulting reproduced signal is an audio signal or a video signal. More particularly, it is assumed that a track is an audio track if the output of the detector 133 indicates that audio is present in one or more sectors of the track, that the start and end flags STF and EDF for such sector are not illegal, that no errors are indicated by the CRC code, that the track number W1 included in the control code CTD is correct, and that a still picture is in fact recorded in the track indicated by the word W4 to contain the corresponding still picture video signal. If all of these conditions are not satisfied for a particular track which is likely to be an audio track, such track is nevertheless assumed to be vacant. In all other cases, that is, when the specified conditions are not satisfied and it is not likely that the track in question is an audio track, it is assumed that such track is a video track.

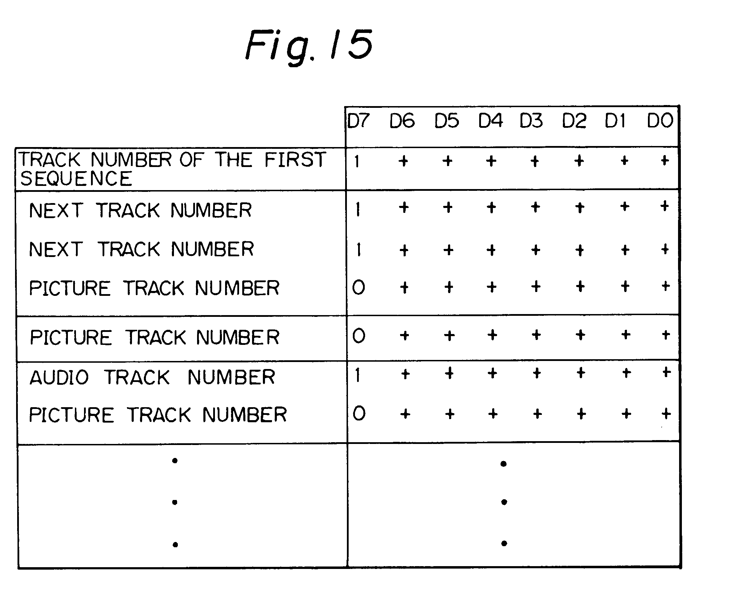

Based on the foregoing, an index table is produced as shown on Fig. 14, that is, for each audio track there are written in the memory 143 for constituting the index table the track number derived from word W1 of the control code CTD, the number of the track in which the head or beginning portion of the respective continuous sequence of audio signals is recorded as represented by the word W2 of the control code CTD, the track number in which the next audio signal in the respective continuous sequence is recorded as indicated by the word W3 of the control code CTD, the track number in which the associated still picture video signal is recorded as indicated by the word W4 of the control code CTD, and any other additional information desired for the index table, such as, the ratio of time-base compression as indicated by the word W6 of the control code CTD. After all of the tracks on the disk 41 have been reproduced initially to provide the table represented on Fig. 14, such table is rearranged in the order of the track numbers in which the still picture video signals are recorded so as to provide an index table as shown on Fig. 15. Thereafter, the audio signals may be reproduced on the basis of such index table.

### Processing Employed When An Error Is Detected In The Connection Information

If there is a defect at an area of the disk 41 at which there are recorded the start flag STF, the end flag EDF and the control code CTD of a sector in the audio track, the connection information for such sector provided by the start flag STF and the end flag EDF and the corresponding picture track number provided by the word W4 of the control code CTD may be lost. In such case, ordinary audio reproduction cannot be effected even if the recorded time-base compressed audio signal TCA in the respective sector is complete.

Therefore, the controller 101 of the reproducing adapter 21 effects the following processing:

If two or three sectors in one audio track are found to be free of error in the respective control codes CTD as a result of error detection by the CRC codes and if the same corresponding picture track numbers are indicated for the two or three sectors by the words W4 in the respective control codes CTD which are free of error, it is determined that the audio signals recorded in the sectors of the track in question are parts of a continuous sequence which is recorded only in that track. In such case, the connection information characteristic of the sector type indicated by the start flag STF and the end flag EDF is disregarded with the result that reproduction of the audio signal recorded in a track is started from the sector #0. The foregoing assumption is valid in the case of the type of electronic still camera described above as having the present invention applied thereto, and in which the maximum duration of each audio signal to be recorded is 9.6 seconds, because in such camera the audio signal is not recorded over a plurality of tracks.

However, other types of electronic still cameras permit the recording of a series of audio signals over a plurality of tracks. In the latter case, if a plurality of tracks on a disk each have two or three sectors free of error and have the same corresponding picture track numbers as indicated by the respective words W4, audio reproduction can be sequentially performed starting with the #0 sector of the radially outer one of the plurality of tracks, while disregarding the connection information indicated by the start flag STF and the end flag EDF of any other sectors. Such audio reproduction is justified so long as the control code CTD recorded in each of the tracks being considered is found to be free of error, and further so long as the start flags STF and the end flags EDF indicate only one sector type which is either TYPE 2 or TYPE 3. The result of the foregoing processing is also stored in the index table at the initiation of a reproducing operation and, if no error is detected when the audio signals are actually reproduced, the index table is finalized on that basis.

It will be appreciated from the above description that, in accordance with the present invention, if two or three sectors within one track are found, as a result of error detection by the CRC code, to contain error-free control codes CTD and if the same corresponding picture track numbers are indicated by the error-free control codes CTD recorded in the two or three sectors, it is determined that the audio signals recorded in such sectors are part of a continuous sequence which is completed in the respective track, thereby permitting the connection information indicated by the start flag STF and the end flag EDF to be disregarded and the reproducing of the audio signals to be started at the #0 sector. As a result of the foregoing, even if a defect is present on the area of the disk in which the flags or control code of a sector of the audio track are recorded, the audio signal can be reproduced so long as the time-base compressed audio signal TCA in the sector is complete.

It will also be appreciated that, in accordance with the present invention, when the rotary switch 14 is positioned to establish the single shot mode for the still picture video recording and the switch 11 is positioned to select the after-recording mode for the audio signals, a vacant track for an audio signal is reserved at the radially outer side or circumference of each of the video tracks in which still picture video signals are recorded one-by-one in response to each actuation of the release button 18. Further, when the continuous shots mode is established by switch 14 so that still picture video signals are continuously recorded in groups of respective video tracks arranged one after the other in the radially inward direction so long as the release button 18 is actuated, a vacant track for the audio signal or signals is reserved at the radially outer side or circumference of the outermost of the video tracks in each of the groups thereof.

By providing the vacant track for after-recording of the audio at the outer circumference of each video track, in the case of the single shot mode, or at the outer circumference of the outermost of the group of video tracks in which the still picture video signals are recorded in the continuous shots mode, it is possible to avoid both the inadvertent loss of audio signals and the inadvertent presence of useless vacant tracks when a previously partially recorded disk is reinstalled in the camera body 1 for the recording of additional video or video and audio signals thereon. More specifically, when a partially recorded disk is installed in the camera body 1 and the after-recording mode is selected, a vacant track is reserved to receive audio at the inner circumference of the last track in which a signal was recorded on the partially recorded disk, and then a video signal is recorded in the next radially inward track. Since the tracks on the disk are arranged one after the other in a radially inward direction in an electronic still camera, the above described arrangement of the audio and video tracks in accordance with the present invention ensures that even if an audio track was last recorded on the partially recorded disk, such audio track will not be erased when the partially recorded disk is used for further recording in the after-recording mode. Further, when the partially recorded disk is used only for the further recording of video signals without providing for the after-recording of audio signals, no uselessly vacant tracks will appear on the disk intermediate its inner and outer circumferential margins.

Furthermore, by recording each audio signal in a track that is radially outward in respect to the track in which an associated still picture video signal is recorded, the access time for the head 44 is reduced in the reproducing mode. More specifically, in this connection, it is noted that the head 44 normally moves radially inward when reproducing the still picture video signals one after the other in the order in which such still pictures were recorded. Thus, in the course of moving radially inward to scan a track in which a still picture video signal is recorded, the head 44 first comes into scanning relation with a track in which the associated time-base compressed audio signal is recorded. Such time-base compressed audio signal is reproduced and then restored to its original time-base by the operation of the A/D converter 134, the RAM 136 and the D/A converter 139 in the reproducing adapter 21 so as to be available as a reproduced sound when the associated still picture video signal is reproduced from the radially inwardly located video track.

## Claims

1. A disk recording apparatus for recording still picture video signals and associated audio signals on a record disk (41), the apparatus comprising :
video recording means (44, 49-66) including means (49-51) for generating still picture video signals, the successively generated still picture video signals being recorded in respective circular video tracks (V₁₁, V₁₂, ...) arranged in succession in one radial direction on said record disk (41);
audio recording means (44, 61-66, 81-96) including audio signal source means (81) and means (87) for time-base compressing an audio signal generated by said source means, said time-base compressed audio signals being recordable in circular audio tracks (A₁₁, A₁₂ ...) on said record disk after the recording of respective associated still picture video signals in respective video tracks; and
controller means (48) adapted to control the recording of video signals so that vacant circular tracks are reserved, at the circumference of respective video tracks facing in the radial direction opposite to said one radial direction, for the subsequent recording of audio signals associated with the still picture video signal in said respective video tracks;
characterized in that there is provided :
first mode selection means (14) for selectively establishing one of a plurality of video recording modes for recording said video signals; and
second mode selection means (11) for selectively establishing one of a plurality of audio recording modes for recording said time-base compressed audio signals;
and in that said controller means (48) is responsive to said first and second mode selection means (11,14) so as to selectively reserve said vacant track (A₁₁, A₁₂ ...) for subsequent recording of audio signals dependent upon the selected audio mode and to control the number of recorded video tracks (V₁₁, V₁₂, ...) in respect of which said vacant audio track is reserved dependent upon the selected video recording mode.

2. A disk recording and/or reproducing apparatus according to claim 1; in which said one radial direction extends radially inward from an outer circumference of said record disk (41) toward the center of the latter, and each of said audio tracks (A₁₁, A₁₂,...) is at the radially outer side of a video track (V₁₁, V₁₂,...) in which an associated still picture video signal is recorded.

3. A disk recording and/or reproducing apparatus according to claim 1; in which said one radial direction extends radially inward from an outer circumference of said record disk (41) toward the center of the latter, said video recording means includes release means (18) actuable to cause recording of said still picture video signals, said one video recording mode is a single shot mode in which one still picture video signal is recorded in a respective one of said video tracks (V₁₁, V₁₂,...) upon each actuation of said release means (18), and a vacant track (A₁₁,A₁₂,...) is reserved at the radially outer side of each said video track in which a still picture video signal is being recorded.

4. A disk recording and/or reproducing apparatus according to claim 3; in which said first mode selecting means (14) is further operative to select a continuous shots mode of video recording in which still picture video signals are continuously recorded in groups of respective video tracks (V₁₁,V₁₂,...) arranged one after the other in said radially inward direction so long as said release means is actuated and, when said continuous shots mode is selected, each said vacant track (A₁₁, A₁₂,...) is reserved at the radially outer side of the outermost of the video tracks (V₁₁,V₁₂,...) in each of said groups thereof.

5. A disk recording and/or reproducing apparatus according to claim 4; in which said one audio recording mode is an after-recording mode in which time-base compressed audio signals associated with the still picture video signals respectively recorded in the video tracks (V₁₁,V₁₂,...) are recorded in the respective reserved vacant tracks only following the recording of said video signals.

6. A disk recording and/or reproducing apparatus according to claim 5; in which said first mode selecting means (14) is further operative to select a simultaneous recording mode when said second mode selecting means (11) selects said single shot mode and in which said time base compressing means receives and compresses an audio signal during the recording of an associated still picture video signal in a respective single video track (V₁₁,V₁₂,...) and, immediately upon the completion of said recording of a still picture video signal in said respective single video track, the associated compressed audio signal is recorded in said vacant track reserved at the radially outer side of said single video track in which the associated still picture video signal has been recorded.

7. A disk recording and/or reproducing apparatus according to claim 3; in which said one audio recording mode is a simultaneous recording mode in which said time-base compressing means receives and compresses an audio signal during the recording of an associated still picture video signal in a respective single video track (V₁₁,V₁₂,...) and, immediately upon the completion of said recording of a still picture video signal in said respective single video track, the associated compressed audio signal is recorded in said vacant track (A₁₁,A₁₂,...) reserved at the radially outer side of said single video track in which the associated still picture video signal has been recorded.

8. A disk recording and/or reproducing apparatus according to claim 1; in which said one radial direction extends radially inward from an outer circumference of the record disk (41) toward the center of the latter, said video recording means (44,49-66) includes release means (18) actuable to cause recording of said still picture video signals, said one video recording mode is a continuous shots mode of video recording in which still picture video signals are continuously recorded in groups of respective video tracks arranged one after the other in said radially inward direction so long as said release means is actuated and, when said continuous shots mode is selected, each said vacant track is reserved at the radially outer side of the radially outermost of the video tracks (V₁₁,V₁₂,...) in each of said groups of the latter.

9. A disk recording and/or reproducing apparatus according to claim 1; further comprising
a camera body (1) containing said video and audio recording means (44, 49-66, 81-96) and said controller means therefor; and
a reproducing adapter (21) connectible to said camera body and including video reproducing means audio reproducing means, and reproducing controller means interfacing with said controller means in the camera body (1).

## Patentansprüche

1. Plattenaufzeichnungsvorrichtung zur Aufzeichnung von Einzelbildvideosignalen und damit verknüpften Audiosignalen auf einer Aufzeichnungsplatte (41), wobei die Vorrichtung aufweist:
eine Videoaufzeichnungseinrichtung (44, 49-66) mit einer Einrichtung (49-51) zur Erzeugung von Einzelbildvideosignalen, wobei die nacheinander erzeugten Einzelbildvideosignale in entsprechenden kreisförmigen Videospuren (V₁₁, V₁₂, ...) aufgezeichnet werden, die nacheinander in einer radialen Richtung auf der Aufzeichnungsplatte (41) angeordnet sind;
eine Audioaufzeichnungseinrichtung (44, 61-66, 81-96) mit einer Audiosignalliefereinrichtung (81) und einer Einrichtung (87) zur Zeitkomprimierung eines Audiosignals, das durch die Liefereinrichtung erzeugt wird, wobei die zeitkomprimierten Audiosignale in kreisförmigen Audiospuren (A₁₁, A₁₂, ...) auf der Aufzeichnungsplatte nach der Aufzeichnung der entsprechenden damit verknüpften Einzelbildvideosignale in entsprechenden Videospuren aufgezeichnet werden können; und
eine Steuerungseinrichtung (48), die die Aufzeichnung von Videosignalen so steuert, daß freie kreisförmige Spuren am Kreisumfang der entsprechenden Videospuren reserviert werden, die in der radialen Richtung gegenüber der einen radialen Richtung zur nachträglichen Aufzeichnung von Audiosignalen gegenüberliegen, die mit dem Einzelbildvideosignal in den entsprechenden Videospuren verknüpft sind;
dadurch gekennzeichnet, daß vorgesehen ist:
eine erste Modusauswahleinrichtung (14), um wahlweise eine von mehreren Videoaufzeichnungsmoden zur Aufzeichnung der Videosignale einzurichten; und
eine zweite Modusauswahleinrichtung (11), um wahlweise eine von mehreren Audioaufzeichnungsmoden zur Aufzeichnung der zeitkomprimierten Audiosignale einzurichten;
und daß die Steuerungseinrichtung (48) auf die erste und zweite Modusauswahleinrichtung (11, 14) anspricht, um wahlweise die freie Spur (A₁₁, A₁₂, ...) für die nachträgliche Aufzeichnung von Audiosignalen in Abhängigkeit vom ausgewählten Audiomodus zu reservieren und die Zahl der aufgezeichneten Videospuren (V₁₁, V₁₂...) zu steuern in bezug auf die freie Audiospur, die in Abhängigkeit vom ausgewählten Videoaufzeichnungsmodus reserviert wird.

2. Plattenaufzeichnungs- und/oder Wiedergabeeinrichtung nach Anspruch 1, bei der die eine radiale Richtung sich radial nach innen von einem äußeren Kreisumfang der Aufzeichnungsplatte (41) in Richtung auf ihre Mitte erstreckt, und wobei alle Audiospuren (A₁₁, A₁₂,...) auf der radial äußeren Seite einer Videospur (V₁₁, V₁₂, ...) sind, in welcher ein damit verknüpftes Einzelbildvideosignal aufgezeichnet ist.

3. Plattenaufzeichnungs- und/oder Wiedergabeeinrichtung nach Anspruch 1, bei der die eine radiale Richtung sich radial nach innen von einem äußeren Kreisumfang der Aufzeichnungsplatte (41) in Richtung auf ihren Mittelpunkt erstreckt, wobei die Videoaufzeichnungseinrichtung eine Auslöseeinrichtung (18) aufweist, die betätigbar ist, um die Aufzeichnung der Einzelbildvideosignale zu veranlassen, wobei der eine Videoaufzeichnungsmodus ein Einzelschnappschußmodus ist, bei dem ein Einzelbildvideosignal in einer entsprechenden Videospur (V₁₁, V₁₂, ...) bei jeder Betätigung der Auslöseeinrichtung (18) aufgezeichnet wird, und wobei eine freie Spur (A₁₁, A₁₂, ...) auf der radial äußeren Seite jeder Videospur reserviert wird, in der ein Einzelbildvideosignal aufgezeichnet ist.

4. Plattenaufzeichnungs- und/oder Wiedergabevorrichtung nach Anspruch 3, bei der die erste Modusauswahleinrichtung (14) weiter einen laufenden Videoaufzeichnungs-Schnappschußmodus auswählen kann, bei welchem Einzelbildvideosignale laufend in Gruppen von entsprechenden Videospuren (V₁₁, V₁₂, ...) aufgezeichnet werden, die nacheinander in der radial nach innen gehenden Richtung angeordnet sind, solange, wie die Auslöseeinrichtung betätigt wird, und wenn der laufende Schnappschußmodus ausgewählt wird, jede freie Spur (A₁₁, A₁₂, ...) in der radial äußeren Seite der äußersten der Videospuren (V₁₁, V₁₂, ...) in jeder ihrer Gruppen reserviert wird.

5. Plattenaufzeichnungs- und/oder Wiedergabevorrichtung nach Anspruch 4, bei der der eine Audioaufzeichnungsmodus ein Nachaufzeichnungsmodus ist, bei dem zeitkomprimierte Audiosignale, die mit den Einzelbildvideosignalen verknüpft sind, die entsprechend in den Videospuren(V₁₁, V₁₂, ...) aufgezeichnet sind, nur in den entsprechenden reservierten freien Spuren aufgezeichnet werden, die der Aufzeichnung der Videosignale folgen.

6. Plattenaufzeichnungs- und/oder Wiedergabevorrichtung nach Anspruch 5, bei der die erste Modusauswahleinrichtung (14) außerdem einen simultanen Aufzeichnungsmodus auswählen kann, wenn die zweite Modusauswahleinrichtung (11) den Einzelschnappschußmodus auswählt, und bei der die Zeitkomprimierungseinrichtung ein Audiosignal während der Aufzeichnung eines damit verknüpften Einzelbildvideosignals in einer entsprechenden Einzelvideospur (V₁₁, V₁₂, ...) empfängt und komprimiert, und sofort nach der Beendigung der Aufzeichnung eines Einzelbildvideosignals in der entsprechenden Einzelvideospur das verknüpfte komprimierte Audiosignal in der freien Spur aufgezeichnet wird, die auf der radial äußeren Seite der Einzelvideospur reserviert ist, in welcher das verknüpfte Einzelbildvideosignal aufgezeichnet wurde.

7. Plattenaufzeichnungs- und/oder Wiedergabevorrichtung nach Anspruch 3, bei der der eine Audioaufzeichnungsmodus ein simultaner Aufzeichnungsmodus ist, bei dem die Zeitkompressionseinrichtung ein Audiosignal während der Aufzeichnung eines verknüpften Einzelbildvideosignals in einer entsprechenden Einzelvideospur (V₁₁, V₁₂, ...) empfängt und komprimiert, und wobei sofort nach Beendigung der Aufzeichnung eines Einzelbildvideosignals in der entsprechenden Einzelvideospur das verknüpfte komprimierte Audiosignal in der freien Spur (A₁₁, A₁₂ ...) aufgezeichnet wird, die auf der radial äußeren Seite der Einzelvideospur reserviert ist, in der das verknüpfte Einzelbildvideosignal aufgezeichnet wurde.

8. Plattenaufzeichnungs- und/oder Wiedergabevorrichtung nach Anspruch 1, bei der die eine radiale Richtung sich radial nach innen von einem äußeren Kreisumfang der Aufzeichnungsplatte (41) in Richtung auf ihren Mittelpunkt erstreckt, wobei die Videoaufzeichnungseinrichtung (44, 49-66) eine Auslöseeinrichtung (18) aufweist, die bei Betätigung die Aufzeichnung der Einzelbildvideosignale veranlaßt, wobei der eine Videoaufzeichnungsmodus ein laufender Videoaufzeichnungs-Schnappschußmodus ist, bei dem Einzelbildvideosignale laufend in Gruppen von entsprechenden Videospuren aufgezeichnet werden, die nacheinander in der radial nach innen gehenden Richtung angeordnet sind, solange, wie die Auslöseeinrichtung betätigt wird, und, wenn der laufende Schnappschußmodus ausgewählt wird, jede freie Spur auf der radial äußeren Seite der radial äußersten der Videospuren (V₁₁, V₁₂ ...) in jeder der Gruppen der letzteren reserviert wird.

9. Plattenaufzeichnungs- und/oder Wiedergabevorrichtung nach Anspruch 1, die weiter aufweist:
eine Kamera (1), die eine Video- und Audioaufzeichnungseinrichtung (44, 49-66, 81-96) aufweist und dafür die Steuerungseinrichtung; und
einen Wiedergabeadapter (21), der mit der Kamera verbunden werden kann und der eine Videowiedergabeeinrichtung, eine Audiowiedergabeeinrichtung, und eine Wiedergabesteuerungseinrichtung besitzt, die die Schnittstelle mit der Steuerungseinrichtung in der Kamera (1) bilden.

## Revendications

1. Appareil d'enregistrement de disque pour enregistrer des signaux vidéo d'image fixe et des signaux associés sur un disque d'enregistrement (41), l'appareil comprenant :
un moyen d'enregistrement vidéo (44, 49-66) incluant un moyen (49-51) pour générer des signaux vidéo d'image fixe, les signaux vidéo d'image fixe générés successivement étant enregistrés sur des pistes vidéo circulaires respectives (V₁₁, V₁₂, ...) agencées en succession suivant une direction radiale dudit disque d'enregistrement (41) ;
un moyen d'enregistrement audio (44, 61-66, 81-96) incluant un moyen de source de signal audio (81) et un moyen (87) pour comprimer du point de vue de la base de temps un signal audio généré par ledit moyen de source, lesdits signaux audio comprimés du point de vue de la base de temps pouvant être enregistrés sur des pistes audio circulaires (A₁₁, A₁₂, ...) sur ledit disque d'enregistrement après l'enregistrement de signaux vidéo d'image fixe associés respectifs sur des pistes vidéo respectives; et
un moyen de contrôleur (48) conçu pour contrôler l'enregistrement de signaux vidéo de telle sorte que des pistes circulaires vacantes soient réservées, au niveau de la circonférence des pistes vidéo respectives orientées suivant la direction radiale opposée à ladite une direction radiale, pour l'enregistrement ultérieur de signaux audio associés au signal vidéo d'image fixe sur lesdites pistes vidéo respectives,
caractérisé en ce que sont prévus :
un premier moyen de sélection de mode (14) pour établir sélectivement l'un d'une pluralité de modes d'enregistrement vidéo pour enregistrer lesdits signaux vidéo ; et
un second moyen de sélection de mode (11) pour établir sélectivement l'un d'une pluralité de modes d'enregistrement audio pour enregistrer lesdits signaux audio comprimés du point de vue de la base de temps;
et en ce que ledit moyen de contrôleur (48) est sensible auxdits premier et second moyens de sélection de mode (11, 14) pour réserver sélectivement ladite piste vacante (A₁₁, A₁₂, ...) en vue d'un enregistrement ultérieur de signaux audio en fonction du mode audio sélectionné et pour commander le nombre de pistes vidéo enregistrées (V₁₁, V₁₂, ...) en relation avec lesquelles ladite piste audio vacante est réservée en fonction du mode d'enregistrement vidéo sélectionné.

2. Appareil d'enregistrement et/ou de reproduction de disque selon la revendication 1, dans lequel ladite une direction radiale s'étend radialement vers l'intérieur depuis une circonférence externe dudit disque d'enregistrement (41) en direction du centre de ce dernier et chacune desdites pistes audio (A₁₁, A₁₂, ...) est au niveau du côté radialement externe d'une piste vidéo (V₁₁, V₁₂, **...)** sur laquelle un signal vidéo d'image fixe associé est enregistré.

3. Appareil d'enregistrement et/ou de reproduction de disque selon la revendication 1, dans lequel ladite une direction radiale s'étend radialement vers l'intérieur depuis une circonférence externe dudit disque d'enregistrement (41) en direction du centre de ce dernier, ledit moyen d'enregistrement vidéo inclut un moyen de déclenchement (18) actionnable pour provoquer l'enregistrement desdits signaux vidéo d'image fixe, ledit un mode d'enregistrement vidéo est un mode prise de vue individuelle dans lequel un signal vidéo d'image fixe est enregistré sur l'une respective desdites pistes vidéo (V₁₁, V₁₂) suite à chaque actionnement dudit moyen de déclenchement (18), et une piste vacante (A₁₁, A₁₂,...) est réservée au niveau du côté radialement externe de chaque dite piste vidéo sur laquelle un signal vidéo d'image fixe est en train d'être enregistré.

4. Appareil d'enregistrement et/ou de reproduction de disque selon la revendication 3, dans lequel ledit premier moyen de sélection de mode (14) fonctionne en outre pour sélectionner un mode prises de vue en continu d'enregistrement vidéo dans lequel des signaux vidéo d'image fixe sont enregistrés en continu sur des groupes de pistes vidéo respectives (V₁₁, V₁₂, ...) agencées les unes après les autres suivant ladite direction radialement interne tant que le moyen de déclenchement est activé et lorsque ledit mode prises de vue en continu est sélectionné, chaque dite piste vacante (A₁₁, A_{12,} ...) est réservée au niveau du côté radialement externe de la plus externe des pistes vidéo (V₁₁, V_{12,} ...) contenue dans chacun desdits groupes de celles-ci.

5. Appareil d'enregistrement et/ou de reproduction de disque selon la revendication 4, dans lequel ledit un mode d'enregistrement audio est un mode de post-enregistrement dans lequel des signaux audio comprimés du point de vue de la base de temps associés aux signaux vidéo d'image fixe respectivement enregistrés sur les pistes vidéo (V₁₁, V₁₂, ...) sont enregistrés sur les pistes vacantes réservées respectives seulement suite à l'enregistrement desdits signaux vidéo.

6. Appareil d'enregistrement et/ou de reproduction de disque selon la revendication 5, dans lequel ledit premier moyen de sélection de mode (14) fonctionne en outre pour sélectionner un mode d'enregistrement simultané lorsque ledit second moyen de sélection de mode (11) sélectionne ledit mode prise de vue individuelle et dans lequel ledit moyen de compression du point de vue de base de temps reçoit et comprime un signal audio pendant l'enregistrement d'un signal vidéo d'image fixe associé sur une unique piste vidéo respective (V₁₁, V₁₂,...) et immédiatement suite à la fin dudit enregistrement d'un signal vidéo d'image fixe sur ladite unique piste vidéo respective, le signal audio comprimé associé est enregistré sur ladite piste vacante réservée au niveau du côté radialement externe de ladite unique piste vidéo sur laquelle le signal vidéo d'image fixe associé a été enregistré.

7. Appareil d'enregistrement et/ou de reproduction de disque selon la revendication 3, dans lequel ledit un mode d'enregistrement audio est un mode d'enregistrement simultané dans lequel ledit moyen de compression de base de temps reçoit et comprime un signal audio pendant l'enregistrement d'un signal vidéo d'image fixe associé sur une unique piste vidéo respective (V₁₁, V₁₂, ...) et immédiatement suite à la fin dudit enregistrement d'un signal vidéo d'image fixe sur ladite unique piste vidéo respective, le signal audio comprimé associé est enregistré sur ladite piste vacante (A₁₁, A₁₂, ...) réservée au niveau du côté radialement externe de ladite unique piste vidéo sur laquelle le signal vidéo d'image fixe associé a été enregistré.

8. Appareil d'enregistrement et/ou de reproduction de disque selon la revendication 1, dans lequel ladite une direction radiale s'étend radialement vers l'intérieur depuis une circonférence externe du disque d'enregistrement (41) en direction du centre de ce dernier, ledit moyen d'enregistrement vidéo (44, 49-66) inclut un moyen de déclenchement (18) actionnable pour provoquer l'enregistrement desdits signaux vidéo d'image fixe, ledit un mode d'enregistrement vidéo est un mode prises de vue en continu d'enregistrement vidéo dans lequel des signaux vidéo d'image fixe sont enregistrés en continu selon des groupes de pistes vidéo respectives agencées les unes après les autres suivant ladite direction radialement interne tant que ledit moyen de déclenchement est activé et lorsque ledit mode prises de vue en continu est sélectionné, chaque dite piste vacante est réservée au niveau du côté radialement externe de la plus radialement externe des pistes vidéo (V₁₁, V₁₂, ...) de chacun desdits groupes de celles-ci.

9. Appareil d'enregistrement et/ou de reproduction de disque selon la revendication 1, comprenant en outre :
un corps de caméra (1) contenant lesdits moyens d'enregistrement vidéo et audio (44, 49-66, 81-96) et ledit moyen de contrôleur afférent ; et
un adaptateur de reproduction (21) qui peut être connecté audit corps de caméra et qui inclut un moyen de reproduction vidéo, un moyen de reproduction audio et un moyen de contrôleur de reproduction interfacé avec ledit moyen de contrôleur dans le corps de caméra (1).
